# EUROPÄISCHE PATENTSCHRIFT

(11) **EP 3 040 318 B1**
(45) Veröffentlichungstag und Bekanntmachung des Hinweises auf die Patenterteilung: **05.08.2020**
(21) Anmeldenummer: 15201182.1
(22) Anmeldetag: 18.12.2015
(51) Int. Cl.: C03C 3/097, C03C 10/14, C03C 23/00

(54) **GLASKERAMISCHES SUBSTRAT AUS EINER TRANSPARENTEN, EINGEFÄRBTEN LAS-GLASKERAMIK UND VERFAHREN ZU DESSEN HERSTELLUNG**
GLASS-CERAMIC SUBSTRATE MADE FROM A TRANSPARENT, COLOURED LAS GLASS CERAMIC AND METHOD FOR PRODUCING THE SAME
SUBSTRAT EN VITROCERAMIQUE COMPOSE DE VITROCERAMIQUE LAS COLORE, TRANSPARENT ET SON PROCEDE DE FABRICATION

(30) Priorität: 23.12.2014 DE 102014226986
(43) Veröffentlichungstag der Anmeldung: 06.07.2016
(73) Patentinhaber: Schott AG, 55122 Mainz (DE)
(72) Erfinder: Gabel, Falk, 65388 Schlangenbad (DE); Hochrein, Oliver, 55130 Mainz (DE); Weiss, Evelin, 55131 Mainz (DE); Dudek, Roland, 55545 Bad Kreuznach (DE); Martens, Uwe, 55252 Mainz-Kastel (DE)
(74) Vertreter: Mehler Achler

(56) Entgegenhaltungen:
- DE-A1-102008 050 263
- US-A1- 2010 304 948
- US-A1- 2014 238 971

## Beschreibung

Die Erfindung betrifft ein glaskeramisches Substrat aus einer transparenten, eingefärbten LAS-Glaskeramik mit einer Gradientenschicht und einem darunterliegenden Kern. Im Kern liegt Keatitmischkristall (KMK) als vorherrschende Kristallphase und in der Gradientenschicht Hochquarzmischkristall (HQMK) als vorherrschende Kristallphase vor. Die Erfindung betrifft ferner ein Verfahren zur Herstellung des glaskeramischen Substrates und dessen Verwendung.

Die Herstellung der gattungsgemäßen LAS-Glaskeramiken erfolgt in mehreren Stufen. Bei deren großtechnischer Herstellung wird bekanntermaßen zunächst das kristallisierbare Ausgangsglas des Systems Li₂O-Al₂O₃-SiO₂ aus einem Gemisch aus Scherben und pulverförmigen Gemengerohstoffen bei Temperaturen üblicherweise zwischen 1500°C und 1650°C erschmolzen. Bei der Schmelze wird typischerweise Läutermittel wie Arsen-, Antimon- und/oder Zinnoxid als Läutermittel eingesetzt. Der Einsatz von SnO₂ in Verbindung mit Hochtemperaturläuterung oberhalb 1700°C wird beispielhaft in der DE 199 39 787 C2 beschrieben.

Nach dem Einschmelzen und Läutern erfährt das Glas üblicherweise eine Heißformgebung durch Walzen oder Floaten, um Platten herzustellen. Für eine wirtschaftliche Herstellung ist zum einen eine niedrige Schmelztemperatur und eine niedrige Verarbeitungstemperatur VA gewünscht, zum anderen darf das Glas bei der Formgebung keine Entglasung zeigen. Das heißt, es dürfen sich keine störenden Kristalle bilden, die in den Ausgangsgläsern und den daraus hergestellten Glaskeramiken die Festigkeit und den ästhetischen Eindruck beeinträchtigen können. Da die Formgebung in der Nähe der Verarbeitungstemperatur VA (Viskosität 10⁴ dPas) des Glases stattfindet, muss gewährleistet sein, dass die obere Entglasungstemperatur der Schmelze in der Nähe und günstigerweise unter der Verarbeitungstemperatur liegt, um die Bildung störender Kristalle zu vermeiden.

Anschließend wird das Ausgangsglas bekanntermaßen durch gesteuerte Kristallisation in den glaskeramischen Artikel überführt. Diese Keramisierung erfolgt üblicherweise in einem zweistufigen Prozess, bei dem zunächst durch Keimbildung bei einer Temperatur zwischen 680°C und 800°C Keime, üblicherweise aus ZrO₂/TiO₂-Mischkristallen, erzeugt werden. Auch SnO₂ kann an der Keimbildung beteiligt sein. Bei anschließender Temperaturerhöhung wachsen zunächst die Hochquarzmischkristalle auf diesen Keimen auf. Hohe Kristallwachstumsgeschwindigkeiten, wie sie für eine wirtschaftliche, schnelle Keramisierung gewünscht sind, werden für die meisten Zusammensetzungen je nach Strukturtyp im Temperaturbereich von 850°C bis 1200°C erreicht. Bei dieser maximalen Herstelltemperatur wird das Gefüge der Glaskeramik homogenisiert und die optischen, physikalischen und chemischen Eigenschaften der Glaskeramik eingestellt. Hochquarzmischkristall wird in der Literatur auch mit dem Synonym "Beta-Quarz" oder "Beta-Eukryptit" benannt. Ein Beispiel für einen solchen Prozess sowie eine nach einem solchen Prozess hergestellte Glaskeramik ist aus der US 2010/0304948 A1 bekannt.

Es ist auch bekannt, dass sich die Hochquarzmischkristalle in dem Li₂O-Al₂O₃-SiO₂-System durch einen weiteren Keramisierungsprozess in einen Keatitmischkristall umwandeln lassen. Keatitmischkristall wird auch als "Beta-Spodumen" bezeichnet. Die Umwandlung in Keatitmischkristalle erfolgt bei den meisten Zusammensetzungen bei Temperaturen bis zu 1200°C durch eine rekonstruktive, irreversible Phasenumwandlung. Bekanntermaßen wachsen die Kristallite bei dieser Phasenumwandlung deutlich und bilden hierdurch bedingt Streuzentren aus, welche zu einer Transluzenz bzw. Opazität der Glaskeramiken führen. Mit dem Übergang von Hochquarz- zu Keatitmischkristallen erhöht sich außerdem der thermische Ausdehnungskoeffizient der Glaskeramik.

Unter "transparent" im Sinne dieser Schrift werden Glaskeramiken verstanden, welche in Abgrenzung zu "transluzenten" oder "opaken" Glaskeramiken im sichtbaren Wellenlängenbereich nur vernachlässigbare Streulichtanteile aufweisen. Transparenz steht also für die "Klarheit" der Glaskeramik im Gegensatz zu deren "Trübung". Transmissionsverluste unter diesem Aspekt sind der Brechung an den Kristallen, Phasengrenzen oder Einschlüssen geschuldet und sind deshalb wellenlängenabhängige Volumeneffekte. Während unter einer "transluzenten" LAS-Glaskeramik eine solche mit einem Streulichtanteil ("Haze") bei einer Wellenlänge von 470 nm von mehr als 20 %, gemessen nach dem internationalen Standard ISO 14782: 1999(E), normiert auf eine 4 mm dicke Glaskeramik, verstanden wird, weist eine "transparente" LAS-Glaskeramik einen solchen Streulichtanteil von nicht mehr als 20 % auf.

Als "eingefärbt" im Sinne dieser Schrift wird die LAS-Glaskeramik bezeichnet, wenn sie aufgrund eines oder mehrerer färbender Metalloxide oder Kolloide in ihrer Zusammensetzung im sichtbaren Wellenlängenbereich Transmissionsverluste aufgrund von Absorption zeigt. Auch hierbei handelt es sich also um wellenlängenabhängige Volumeneffekte. Die Einfärbung kann insbesondere so dunkel sein, dass nicht leuchtende Objekte durch die LAS-Glaskeramik hindurch mit bloßem Auge nicht erkennbar, leuchtende Objekte hingegen sichtbar sind. Eine eingefärbte Glaskeramik kann demnach undurchsichtig und nach vorstehender Definition gleichzeitig "transparent" bezeichnet werden.

Eine typische Anwendung für die gattungsgemäße Glaskeramik sind beispielsweise Kochflächen, deren Anforderungen im praktischen Einsatz an das Transmissionsverhalten sehr spezifisch und sogar zuweilen gegenläufig sind. Um beispielsweise die störende Durchsicht auf die technischen Bauelemente unter der Glaskeramik-Kochfläche zu verhindern und um die Blendwirkung durch strahlende Heizkörper, insbesondere helle Halogen-Heizkörper zu vermeiden, sind die Glaskeramik-Kochflächen in ihrer integralen Transmission begrenzt. Andererseits sollen während des Betriebes, auch bei niedriger Leistung die strahlenden Heizkörper gut erkennbar sein. Auch für die Anzeigefähigkeit ist eine gewisse Lichttransmission erforderlich, wenn beispielsweise Leuchtdioden unterhalb der Kochplatte eingebaut werden. Um diesen Anforderungen zu genügen, sind Glaskeramik-Kochflächen üblicherweise auf Werte der integralen Transmission τᵥᵢₛ von 0,5% bis 5% eingestellt. Dies wird durch Zusätze von färbenden Elementen erreicht. Glaskeramik-Kochflächen erscheinen dann unabhängig vom verwendeten Farbelement aufgrund der niedrigen Lichttransmission in Aufsicht schwarz, in Durchsicht je nach verwendeten farbgebenden Elementen meist rot, rotviolett oder braunorange.

Ein früherer Typ von Glaskeramik-Kochflächen, bekannt unter dem Namen Ceran Color®, hergestellt von der SCHOTT AG, besaß gute farbliche Anzeigefähigkeit. Ceran Color® ist durch Zusätze von NiO, CoO, Fe₂O₃ und MnO gefärbt und durch Sb₂O₃ geläutert. Durch diese Kombination von Farboxiden wird eine integrale Lichttransmission von typischerweise 1,2% für Kochflächen mit üblicher Dicke von 4 mm eingestellt. Die Transmission im Bereich von 380 nm bis 500 nm beträgt je nach Wellenlänge 0,1-2,8%. Bei einer für rote Leuchtdioden üblichen Wellenlänge von 630 nm beträgt die Transmission ca. 6%. Nachteilig bei diesem früheren Typ von Glaskeramik-Kochflächen ist, dass die verwendeten Farboxide auch sehr stark im Infraroten absorbieren. Die IR-Transmission bei 1600 nm beträgt weniger als 20%. Damit ist die Ankochgeschwindigkeit herabgesetzt. Die Transmissionskurve von Ceran Color® ist in dem Buch "Low Thermal Expansion Glass Ceramics", Editor Hans Bach, Springer-Verlag Berlin Heidelberg 1995, auf Seite 66 abgebildet (ISBN 3-540-58598-2). Die Zusammensetzung ist in dem Buch "Glass-Ceramic Technology", Wolfram Höland und George Beall, The American Ceramic Society 2002 in Tabelle 2-7 aufgeführt.

In neueren, weiter entwickelten Glaskeramik-Kochflächen wird meist V₂O₅ zur Einfärbung verwendet, weil es die besondere Eigenschaft besitzt, im Bereich des sichtbaren Lichtes zu absorbieren und im Bereich der Infrarotstrahlung eine hohe Transmission zu erlauben. Die Einfärbung durch V₂O₅ ist ein komplexer Prozess. Wie in früheren Untersuchungen (DE 199 39 787 C2) gezeigt wurde, ist für die Überführung des Vanadiumoxids in den färbenden Zustand ein Redoxvorgang Voraussetzung. Im kristallisierbaren Ausgangsglas färbt das V₂O₅ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner fungiert das Läutermittel. Gezeigt wurde das durch Mössbauer-Untersuchungen an Sb-geläuterten Zusammensetzungen sowie an Sn-geläuterten Zusammensetzungen. Beim Keramisieren wird ein Teil des Sb³⁺ bzw. Sn²⁺ im Ausgangsglas in die höhere Oxidationsstufe Sb⁵⁺ bzw. Sn⁴⁺ überführt. Es ist anzunehmen, dass das Vanadium in reduzierter Oxidationsstufe als V⁴⁺ oder V³⁺ in den Keimkristall eingebaut wird und dort durch Elektronen-Chargetransfer-Reaktionen intensiv färbt. Als weiterer Redoxpartner kann auch TiO₂ die Einfärbung durch Vanadiumoxid verstärken. Neben der Art und Menge der Redoxpartner im Ausgangsglas hat auch der Redoxzustand, der im Glas bei der Schmelze eingestellt wird, einen Einfluss. Ein niedriger Sauerstoff-Partialdruck pO₂ - zum Beispiel in einer durch hohe Schmelztemperaturen reduzierend eingestellte Schmelze - verstärkt die Farbwirkung des Vanadiumoxids.

Sowohl die LAS-Glaskeramiken mit KMK als auch die mit HQMK als vorherrschende Kristallphase sind aus verschiedenen Anwendungsgebieten seit langem bekannt. Beispielsweise besitzt der Großteil der kommerziell erhältlichen Kochflächen bestehend aus LAS-Glaskeramik HQMK als vorherrschende Kristallphase. Der Kristallphasenanteil dieser Glaskeramiken liegt in der Regel zwischen 55-80 Vol.-%. Die mittleren Kristallitgrößen der HQMK liegen durchschnittlich unter 50 nm. Diese Glaskeramiken sind deshalb transparent und können durch farbgebende Komponenten wie vorstehend beschrieben eingefärbt werden.

Seltener werden Kochflächen bestehend aus LAS-Glaskeramiken mit KMK als Hauptkristallphase verwendet. Derartige Glaskeramiken sind insbesondere im Wellenlängenbereich zwischen 380 nm und 500 nm nicht transparent sondern transluzent bis opak. Gerade bei hohen Temperaturen, bei denen die Phasenumwandlung für einen industriellen, wirtschaftlichen Prozess hinreichend schnell stattfindet, werden Kristallite in der Größenordnung von >135 nm ausgebildet, welche zu der beschriebenen starken Lichtstreuung im Material führen. Der Phasengehalt der kristallinen Spezies der transluzenten oder opaken Glaskeramik mit KMK als Hauptkristallphase liegt zwischen 70 - 95 Vol.-%.

Konkret ist beispielsweise aus der Schrift US 4,218,512 A eine transluzente LAS-Glaskeramik mit KMK als vorherrschende Kristallphase sowie ein Verfahren zu deren Erzeugung bekannt. Ausgehend von einem nicht keramisierten Grünglas umfasst das dort beschriebene Verfahren die Schritte Erwärmen des Glaserzeugnisses auf eine erste Temperatur von über 700°C, bei der eine Umwandlung in eine Glaskeramik mit HQMK als vorherrschende Kristallphase erzeugt wird. Anschließend wird die Temperatur auf einen zweiten Wert von über 860°C angehoben, bei dem die Hochquarzmischkristalle in Keatitmischkristalle umgewandelt werden, wobei die Aufwärmzeit und Haltedauer in dieser Phase mehrere Stunden beträgt. Diese Prozessführung hat wirtschaftliche Nachteile, da die Gesamtprozesszeit bei > 10 Stunden liegt. Für das angegebene sind Ausführungsbeispiel sogar 20 Stunden angegeben wurde. Auch ist aus dieser Schrift bekannt, dass es auf diese Weise möglich ist, an der Oberfläche eine in etwa 40 µm dicke Schicht zu bewahren, in der weiterhin HQMK als vorherrschende Kristallphase vorliegt. Ferner ist aus dieser Schrift bekannt, dass die Hochquarzmischkristalle einen kleineren thermischen Ausdehnungskoeffizienten aufweisen als die Keatitmischkristalle.

Eine andere transluzente Glaskeramik mit KMK als vorherrschende Kristallphase ist aus der Schrift EP 1 170 264 A1 bekannt. Dieser Schrift zufolge fand die Keramisierung zunächst bei einer Kristallisationstemperatur von 750°C bis 900°C zur Erzeugung der HQMK-Phase und nach weiterer Temperaturerhöhung in einem Bereich von 900°C bis 1200°C zur Umwandlung derselben in eine KMK-Phase statt. Auch diese Schrift weist darauf hin, dass sich an der Oberfläche Hochquarzmischkristalle als dominierende Kristallphase bilden. Hierbei wird besonderes Augenmerk darauf gerichtet, dass an der Oberfläche keine Umwandlung in eine Tiefquarzstruktur stattfindet, um zu hohe Spannungen in der Oberfläche zu vermeiden, die gegebenenfalls zu einer Rissbildungsneigung in der Oberfläche und damit zu einer Materialschwächung führen könnten.

Eine weitere Schrift, die sich mit der Gattung der transluzenten Glaskeramik mit KMK als Hauptphase auseinandersetzt, ist die DE 10 2004 024 583 A1, bei der die Keramisierung der Glaskeramik ebenfalls in zwei Schritten erfolgt. Zunächst wird die Kristallisation von Hochquarzmischkristallen bei einer Temperatur von 840°C durchgeführt und anschließend bei einer Maximaltemperatur zwischen 1070°C und 1094°C eine Umwandlung in Keatitmischkristalle vollzogen. Die Stoßfestigkeit des so hergestellten Glaskeramikproduktes wird durch eine Kugelfallprüfung an einer 4 mm dicken Glaskeramikscheibe mittels einer 200 g schweren Stahlkugel ermittelt, welche auf einen 100 x 100 mm² großen Ausschnitt eines Probekörpers fallengelassen wird. Es wurden so Bruchfallhöhen zwischen 25 und 29 cm ermittelt.

Transluzente oder opake Glaskeramiken mit KMK als vorherrschende Kristallphase sind auch aus der Patentanmeldung US 2007/0213192 A1 bekannt, die eine Keramisierung bei einer Maximaltemperatur von 900°C bis 1050°C und einer Haltezeit von wenigstens 10 min vorschlägt.

Auch aus der Schrift US 4,211,820 ist bekannt, dass sich LAS-Glaskeramiken mit Keatitmischkristall als vorherrschende Kristallphase als gefärbte Glaskeramik zur Verwendung als Kochfläche eignen. Wie allgemein bekannt, stellt auch diese Schrift heraus, dass die Ausbildung von KMK als dominierende Kristallphase im Kern der Glaskeramik und die Präsenz von HQMK als dominierende Kristallphase in deren Oberfläche aufgrund der Spannungsverteilung zu einer Festigung der gesamten Glaskeramik führt. Darüber hinaus wird festgestellt, dass bei Keramisierungstemperaturen von maximal 900°C bis 950°C der Beginn einer sehr schwachen Streuung beobachtet werden kann. Generell muss der Schrift zufolge das Wachstum von Beta-Spodumen-Kristallen im oberflächennahen Bereich vermieden werden, woraus andernfalls transluzente oder gar opake Erzeugnisse resultieren. Zwar wird in der Schrift von einer im Wesentlichen transparenten Glaskeramik gesprochen. Jedoch werden die ermittelten Kristallgrößen mit unter 1 µm bzw. mehrheitlich unter 500 nm angegeben, was tatsächlich für eine transluzente Glaskeramik im Sinne der vorstehenden Definition spricht.

Noch eine weitere Schrift, die sich mit einer transluzenten Glaskeramik mit KMK als dominierende Kristallphase im Kern und HQMK als dominierende Kristallphase in einer Gradientenschicht befasst, ist die DE 10 2010 006 232 A1. Das Glaserzeugnis wird während des Keramisierens schnell auf eine Maximaltemperatur von 1080°C bis 1300°C aufgeheizt, auf der Maximaltemperatur höchstens 2 min gehalten oder bevorzugt sofort wieder auf Zimmertemperatur abgekühlt. Dadurch lassen sich Glaskeramiken mit hohen Stoß- und Temperaturunterschiedsfestigkeiten und mit einem Weißwert L* > 95 herstellen.

Schließlich befasst sich auch die Schrift US 2014/0238971 A1 mit einer Glaskeramik mit Keatitmischkristallen als Hauptkristallphase. In der Schrift wird erkannt, dass die Glaskeramik auch einen Anteil von Hochquarzmischkristallen enthalten kann. Die Keramisierung findet bei einer Maximaltemperatur von 950°C bis 1060°C über einen Zeitraum von 5 bis 15 min statt. Die Glaszusammensetzung enthält Fe₂O₃ in Verbindung mit Cr₂O₃ als färbende Komponenten, um eine braun-graue Färbung nach der Keramisierung zu erhalten. Dabei wird ein Lightness-Wert L* zwischen 25 und 45 angestrebt, also eine transluzente bis opake Glaskeramik.

Wie zu den vorstehend beispielhaft aufgezählten Schriften betreffend transluzente Glaskeramiken mit KMK als Hauptkristallphase im Kern gibt es auch eine große Anzahl von Offenbarungen zu Glaskeramiken mit HQMK als vorherrschende Kristallphase im Kern. Beispielhaft wird hier nur auf die Schrift DE 10 2008 050 263 A1 verwiesen. Die darin offenbarte Glaskeramik ist transparent und eingefärbt. Die Keramisierung findet bei einer maximalen Temperatur von 940°C bei einer Haltezeit von höchstens 15 min statt.

Aus der Schrift DE 10 2007 025 893 A1 ist darüber hinaus bekannt, dass sich auch LAS-Glaskeramiken mit Keatitmischkristall als vorherrschende Kristallphase herstellen lassen, die transparent sind. Die Schrift hat genauer eine Glaskeramik mit Keatitmischkristallen als vorherrschende Kristallphase in einem Anteil von 60 bis 98 Vol.-% zum Gegenstand, welche als antiballistische Panzerung vorgesehen ist und deshalb eine besonders hohe Festigkeit erfordert. Zugleich wird in der Schrift festgestellt, dass durch geeignete Wahl des Ausgangsglases und Temperaturführung bei der Keramisierung auch eine solche Glaskeramik transparent im Sinne des Andrejew-Hoppe-Modells wie auch im Sinne des Rayleigh-Ganz-Modells hergestellt werden kann. Verantwortlich für die Transparenz wird hierbei die Ausbildung kleiner Kristalle mit einem mittleren Kristallradius von <30 nm gemacht. Weiterhin kann insbesondere durch die Komponente ZnO der Brechwertunterschied der KMK Kristallite zur Restglasphase eingestellt werden, was auch bei der Optimierung der Transparenz hilfreich ist. Die Glaskeramik ist nicht eingefärbt.

Die Ergebnisse zusammengefasst kann festgestellt werden, dass die Keramisierungsbedingungen einerseits Einfluss auf die mit der KMK-Bildung verbundene Lichtstreuung haben und andererseits hohe Keramisierungstemperaturen und längere Keramisierungszeiten zu einer stärkeren Einfärbung durch das enthaltene Vanadiumoxid führen. Beides kann sich negativ auf die Anzeigefähigkeit auswirken. Zudem ist das Transmissionsverhalten eingefärbter Glaskeramiken unter beiden Aspekten wellenlängenabhängig. Bestrebungen, den Bedienungskomfort und die technischen Funktionen der Geräte durch mehrfarbige Anzeigen möglichst beliebiger Farbgestaltung zu verbessern und/oder den Geräteherstellern durch die Farbgestaltung eine Möglichkeit zur Differenzierung zu eröffnen, stoßen deshalb immer wieder auf technische Schwierigkeiten. Wichtig für die Anzeigefähigkeit, beispielsweise von sogenannten "sieben Segment Anzeigen" oder TFT Displays, wäre neben einer gut eingestellten Absorption auch eine geringe Lichtstreuung im Material. Zu viele Streuzentren im Material führen zu einer Unschärfe in der Anzeige und sind damit für diese Anwendung nachteilig.

Glaskeramiken für Kochflächen müssen neben der Transparenz und Einfärbung noch vielerlei weitere Eigenschaften mit sich bringen. Insbesondere ist ein möglichst geringer thermischer Ausdehnungskoeffizient (mit CTE oder auch α bezeichnet) wichtig, da hierdurch die nötige TUF (Temperaturunterschiedsfestigkeit) stark beeinflusst wird. LAS-Glaskeramiken mit HQMK als Hauptkristallphase zeichnen sich durch einen sehr niedrigen CTE(20/700°C) von etwa 0 - 0.5 ppm/K aus, LAS-Glaskeramiken mit KMK als Hauptkristallphase einen geringfügig höheren CTE(20/700°C) von etwa 0.8 - 1.5 ppm/K.

Weiterhin spielt die mechanische Festigkeit - vorrangig die Stoßfestigkeit - von Kochflächen eine große Rolle. Um die Anforderungen an deren Stoßfestigkeit gemäß nationaler und internationaler Sicherheitsnormen wie beispielsweise EN 60335 bzw. UL 858 bzw. CSA 22.2 zu erfüllen, werden für Kochflächen aus LAS-Glaskeramiken üblicherweise Materialdicken von ≥ 3,8 mm benötigt. Grundsätzlich wären dünnere Flachgläser bereits aufgrund von Materialeinsparung erstrebenswert. Mit der Dicke nimmt aber auch die Stoßbelastbarkeit ab. Die im Falle einer Stoßbelastung auftretende Durchwölbung der Kochfläche und die damit einhergehenden Zugspannungen auf deren Unterseite nehmen aber mit abnehmender Dicke der Kochfläche deutlich zu. Um mit dünneren Kochflächen dennoch die Normanforderungen an die Stoßfestigkeit zu erfüllen, ist deshalb eine erhöhte Festigkeit der Unterseite der Kochfläche erforderlich, die ausreichend ist, den höheren Zugspannungen zu widerstehen.

Aufgabe der vorliegenden Erfindung ist demgemäß eine Glaskeramik und ein Verfahren zu deren Herstellung bereitzustellen, die einen möglichst geringen Materialeinsatz und im Übrigen hinreichende optische Transparenz und Einfärbbarkeit für eine Vielzahl von Anwendungen aufweist.

Die Aufgabe wird gelöst durch ein glaskeramisches Substrat aus einer transparenten, eingefärbten LAS-Glaskeramik mit der folgenden Zusammensetzung (in Gew.%):

| | |
|---|---|
| Al₂O₃ | 18 - 23 |
| Li₂O | 3,0 - 4,2 |
| SiO₂ | 60 - 69 |
| ZnO | 0 - 2 |
| Na₂O + K₂O | 0,2 - 1,5 |
| MgO | 0 - 1,5 |
| CaO+SrO+ BaO | 0 - 4 |
| B₂O₃ | 0 - 2 |
| TiO₂ | 2,3 - 4 |
| ZrO₂ | 0,5 - 2 |
| P₂O₅ | 0 - 3 |
| SnO₂ | 0 - < 0,6 |
| Sb₂O₃ | 0 - 1,5 |
| AS₂O₃ | 0 - 1,5 |
| TiO₂ + ZrO₂ + SnO₂ | 3,8 - 6 |
| V₂O₅ | 0,01 - 0,06 |
| Fe₂O₃ | 0,03 - 0,2 |
| Cr₂O₃ | < 100ppm |

und gegebenenfalls weitere Farboxide, in Summe bis maximal 1,0 Gew.-%, mit einer Gradientenschicht nahe der Oberfläche und einem darunter liegenden Kern, wobei die LAS-Glaskeramik im Kern Keatitmischkristall (KMK) als vorherrschende Kristallphase und in der Gradientenschicht Hochquarzmischkristall (HQMK) als vorherrschende Kristallphase aufweist und wobei der KMK-Kristallphasenanteil in jeder Tiefe ≥ 20 µm, vorzugsweise in jeder Tiefe ≥ 15 µm und besonders bevorzugt in jeder Tiefe ≥ 10 µm, 50% der Summe der HQMK- und KMK-Kristallphasenanteile übersteigt.

Nachfolgend ist vereinfachend anstelle von dem "erfindungsgemäßen glaskeramischen Substrat" auch von einer "erfindungsgemäßen Glaskeramik" die Rede, wenngleich damit nicht der Werkstoff "Glaskeramik" sondern eben das daraus erzeugte Substrat gemeint ist.

Es hat sich überraschend gezeigt, dass aus einer LAS-Glaskeramik, deren Kristallschichtaufbau oder -profil wie vorstehend eingestellt ist und die mit dem nachfolgend beschriebenen Verfahren hergestellt wurde, ein glaskeramisches Substrat erzeugt werden kann, welches eine bisher nicht beschriebene Kombination aus hoher Festigkeit und geeigneter Einfärbbarkeit im sichtbaren Wellenlängenbereich bei zugleich niedriger Streuung (Haze) aufweist. Dadurch eignet sich das erfindungsgemäße Substrat insbesondere für die Anwendung als Kochfläche, dünner als 3,8 mm, bevorzugt mit einer Dicke von nicht mehr als 3,2 mm, und mit hinreichender optischer Transparenz für Lichtanzeigen und Displays.

Das erfindungsgemäße glaskeramische Substrat aus einer transparenten, eingefärbten LAS-Glaskeramik mit der vorstehenden Zusammensetzung und mit einer Gradientenschicht nahe der Oberfläche und einem darunter liegenden Kern, wobei die LAS-Glaskeramik im Kern Keatitmischkristall (KMK) als vorherrschende Kristallphase und in der Gradientenschicht Hochquarzmischkristall (HQMK) als vorherrschende Kristallphase aufweist, lässt sich deshalb auch durch eine Stoßfestigkeit, ausgedrückt in einem "CIL"-Wert von wenigstens 0,8 N, definieren, wobei der CIL-Wert einer Last von besagten wenigstens 0,8 N entspricht, mit der unter einer Umgebungsfeuchte von 10% ein Vickers-Indenter in die Oberfläche der Glaskeramik eingedrückt wird, wobei in wenigstens 10 Versuchen durchschnittlich 2 Risse, ausgehend von den Kanten eines so erzeugten Eindruckes, auftreten.

Es ist dem Fachmann bekannt, dass die Umgebungsfeuchte durch den physikalischen Vorgang der Spannungsrisskorrosion einen Einfluss auf den CIL-Wert hat. Dies führt beispielsweise dazu, dass das gleiche glaskeramische Substrat, gemessen unter einer niedrigeren Umgebungsfeuchte einen höheren CIL-Wert aufweist als bei einer höheren Umgebungsfeuchte. Das erfindungsgemäße glaskeramische Substrat weist demgemäß bei einer Umgebungsfeuchte von 1% bevorzugt einen CIL-Wert von wenigstens 0,98 N auf.

Aufgrund der erhöhten spezifischen Festigkeit ist es erstmals möglich eine transparente, eingefärbte Glaskeramik mit einer Dicke von nur 3 mm, jedenfalls nicht mehr als 3,2 mm, mit gleicher Gesamtbelastbarkeit zu erzeugen, wie die herkömmlichen 4 mm dicken Glaskeramikscheiben. Daraus resultiert eine potentielle Materialersparnis von mindestens 20 % oder eine entsprechende Festigkeitssteigerung bei gleicher Dicke.

Ferner ist es möglich, auf eine unterseitige Benoppung der Kochfläche zu verzichten, die üblicherweise unter anderem zum Zweck der Festigkeitserhöhung eingesetzt wird. Das erfindungsgemäße glaskeramische Substrat ist demgemäß besonders bevorzugt beidseitig glatt ausgeführt.

Diese und weitere Vorteile und Eigenschaften des erfindungsgemäßen Glaskeramisches Substrates und des erfindungsgemäßen Verfahrens werden nachfolgend anhand von Figuren erläutert. Es zeigen:
- Figur 1: ein Diagramm zur Veranschaulichung der Bestimmung der Bruchfestigkeit nach dem "CIL"-Test;
- Figur 2a: ein Diagramm zur Gegenüberstellung der ermittelten Bruchfestigkeit nach dem CIL-Test unter einer Umgebungsfeuchte von 10% und nach einem Kugelfalltest an zwei erfindungsgemäßen Proben und an einer Vergleichsprobe;
- Figur 2b: ein Diagramm zur Gegenüberstellung der ermittelten Bruchfestigkeit nach dem CIL-Test unter einer Umgebungsfeuchte von 1% und nach einem Kugelfalltest an zwei erfindungsgemäßen Proben und an einer Vergleichsprobe;
- Figur 3: ein Diagramm der Kristallphasenanteile HQMK und KMK in Abhängigkeit von der Tiefe, gemessen an einer ersten erfindungsgemäßen Probe, gemessen mittels Dünnschicht-XRD;
- Figur 4: ein Diagramm der Kristallphasenanteile HQMK und KMK in Abhängigkeit von der Tiefe, gemessen an einer zweiten erfindungsgemäßen Probe, gemessen mittels Dünnschicht-XRD;
- Figur 5: ein Diagramm der Kristallphasenanteile HQMK und KMK in Abhängigkeit von der Tiefe, gemessen an einer Vergleichprobe, gemessen mittels Dünnschicht-XRD;
- Figur 6: ein Diagramm der Streulichtmessung ("Haze") an zwei Proben der erfindungsgemäßen Glaskeramik und zwei Vergleichsproben und
- Figur 7: ein Temperatur-Zeit-Diagramm zur Illustration der für die Herstellung der erfindungsgemäßen Glaskeramik notwendigen Keramisierungsparameter.

Zur Bestimmung der Bruchfestigkeit wird in erster Linie das an sich bekannte "Crack initiation load" ("CIL")-Prüfverfahren herangezogen, siehe z.B. US 8,765,262 A. Es sieht vor, dass eine in einer vorzugsweise Stickstoff-gespülten Aufnahme fixierte Probe der Glaskeramik mittels eines Materialprüfgerätes (Mikro-Kombi-Tester von CSM) mit einem Vickers-Eindringkörper V-I-O3 punktuell belastet wird. Die Vorgabelast wird innerhalb von 30 Sekunden linear auf einen ausgewählten Maximalwert erhöht und ohne Haltezeit wieder in derselben Zeit reduziert. Aufgrund der Belastung können, von den Ecken des pyramidalen Eindrucks des Vickerindenters ausgehend, 0 bis 4 Risse in der Glaskeramik entstehen. Der ausgewählte Maximalwert der Last wird stufenweise erhöht, bis bei jedem Eindruck 4 Risse auftreten. Bei jeder Kraft werden wenigstens 10 Messungen durchgeführt, um die Variation der Rissbildung, die auch abhängig von der vorhandenen Oberfläche (Vorschäden) ist, erkennen zu können. Aus der Anzahl der Risse bei gleicher Kraft wird der Mittelwert gebildet.

Die Probe verbleibt vorzugsweise während der Messung bis zur Auszählung der Risse in der Aufnahme. Die Untersuchung wird vorzugsweise unter Stickstoffatmosphäre durchgeführt, um ein unterkritisches Risswachstum durch Feuchtigkeit der Umgebungsluft möglichst zu vermeiden.

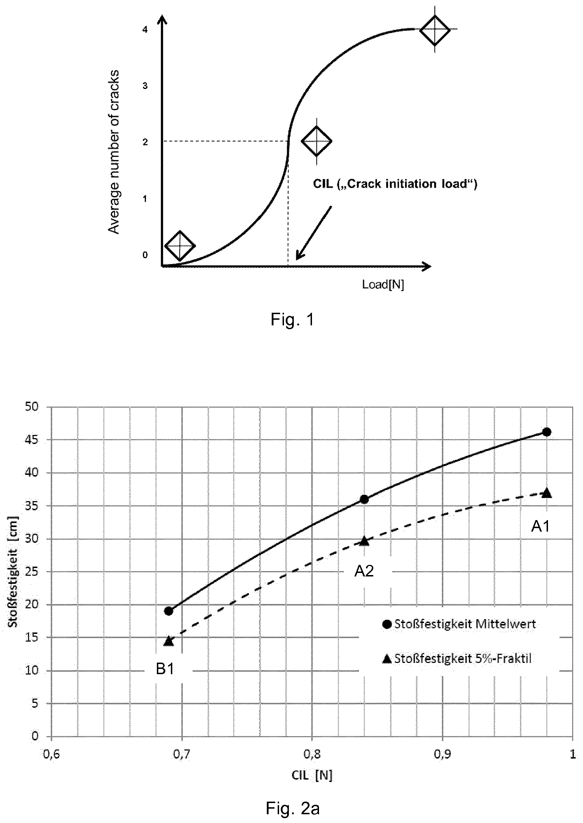

Ermittelt wird so in mehreren Versuchen jeweils die Anzahl der von den Ecken des Eindrucks des Vickerindenters ausgehenden Risse in Abhängigkeit von der aufgebrachten Last. Die ermittelten Rissanzahlen werden in Relation zur Eindrückkraft in einem Diagramm aufgetragen und ein Fit einer Boltzmann-Funktion auf die Last/Riss-Kurve durchgeführt, wie in Figur 1 illustriert ist. Schließlich wird der CIL-Wert der Last, bei der durchschnittlich 2 Risse auftreten, aus dieser Kurve abgelesen und als Kenngröße für die Stoßfestigkeit ausgegeben. In Figur 1 sind beispielhaft drei Messpunkte dargestellt.

Erfindungsgemäß beträgt die unter einer Umgebungsfeuchte von 10% ermittlte Last wenigstens 0,8 N und die unter einer Umgebungsfeuchte von 1% ermittelte Last wenigstens 0,98 N. Die Festigkeit der erfindungsgemäßen Glaskeramik und insbesondere die für das glaskeramische Substrat eines Kochfeldes wichtige Stoßfestigkeit, vgl. EN 60335, UL 858 oder CSA 22.2, können aber auch auf andere Weise ermittelt werden.

Ein alternatives anerkanntes Prüfverfahren zur Ermittlung der Stoßfestigkeit ist der sogenannte Kugelfalltest, siehe z.B. DE 10 2004 024 583 A1. Er wird an quadratischen Teilausschnitten der Größe 100 mm x 100 mm einer zu prüfenden Glaskeramikscheibe gemessen. Die Durchführung der Messung der Stoßfestigkeit geschieht in Anlehnung an die DIN 52306. Hierbei wird die Messprobe in einen Prüfrahmen eingelegt und eine 200 g schwere Stahlkugel mit einem Durchmesser von 36 mm auf die Mitte der Probe fallen gelassen. Die Fallhöhe wird stufenweise gesteigert, bis der Bruch eintritt. Aufgrund des statistischen Charakters der Stoßfestigkeit wird diese Prüfung an einer Serie von mindestens 10 Proben ausgeführt. Als Festigkeitskennwerte werden der Mittelwert, die Standardabweichung und/oder das 5%-Fraktil der Messwertverteilung bestimmt. Letzterer Wert gibt an, bei welcher Fallhöhe 5% der getesteten Proben zu Bruch gingen.

Es ist bekannt, dass die Stoßfestigkeit einer Platte aus Glas oder Glaskeramik unter anderem bestimmt wird von mehr oder weniger zufälligen Oberflächenbeschädigungen. Diese wegen ihrer Zufallsbedingtheit schwer zu kontrollierenden Festigkeitseinflüsse von Oberflächenbeschädigungen führen üblicherweise zu einer hohen Standardabweichung der Messwertverteilung und können somit eine vergleichende Bewertung der Stoßfestigkeit unterschiedlicher Prüflose gravierend verfälschen. Ein möglicher Ausweg ist die Vergrößerung des statistischen Umfangs der Prüfung, was unter Umständen einen erheblichen Aufwand darstellen kann. Eine andere Möglichkeit, die sich in Fachkreisen etabliert hat, besteht darin, die Oberfläche der Platte aus Glas oder Glaskeramik einer für alle Prüflose gleichartigen Oberflächenvorbehandlung in Form einer definierten Vorverletzung zu unterziehen. In den nachfolgend angeführten Beispielen besteht diese Vorverletzung in einem einzelnen Kratzer, der mittig auf der Unterseite der Messprobe gegenüber dem oberseitigen Kontaktpunkt des Kugelschlags aufgebracht wird. Der Kratzer wird mit einer Diamantspitze, in diesem Fall einem Knoop-Indenter, erzeugt, indem diese Diamantspitze parallel zu ihrer längeren Achse mit einer konstanten Anpresskraft von 0,12 N und einer konstanten Geschwindigkeit von 20 mm/min über eine Länge von mindestens 10 mm geradlinig über die Oberfläche der Messprobe geführt wird.

Die Stoßfestigkeit der solcherart kontaktverletzten LAS-Glaskeramik lässt sich in der eingangs beschriebenen Weise mit Hilfe der Kugelfallprüfung ermitteln. Die Standardabweichung von typischerweise unter 10% relativ ist nur noch gering, so dass die Messung einer zuverlässigen statistischen Bewertung bei zugleich vertretbarem Umfang der Prüflose zugänglich ist.

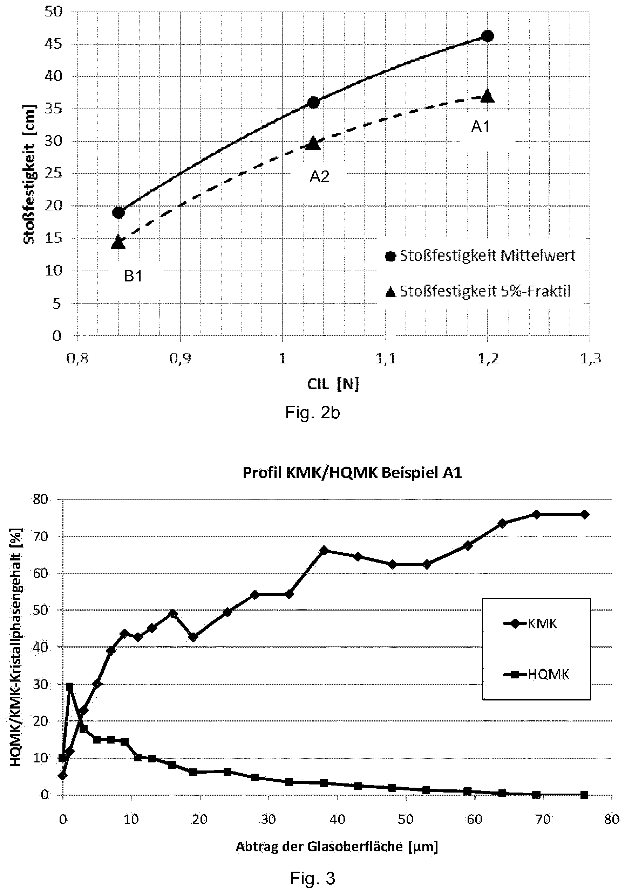

Die mit dem beschriebenen CIL-Test und dem beschriebenen Kugelfalltest an vorgeschädigten Proben ermittelten Messergebnisse sind in den Figuren 2a und 2b in zwei Diagrammen zum Vergleich gegeneinander aufgetragen. Es wurden jeweils zwei Glaskeramiken bzw. erfindungsgemäße glaskeramische Substrate A1 und A2 und eine Vergleichskeramik B1 mit HQMK als vorherrschende Kristallphase im Kern geprüft. Während die CIL-Messungen gemäß Figur 2a einer Umgebungsfeuchte von 10% durchgeführt wurden, fanden die CIL-Messungen gemäß Figur 2b unter einer Umgebungsfeuchte von 1% statt. Die Kugelfalltest wurden unter Allltagsbedingungen bei einer Umgebungsfeuchte von ca. 50% durchgeführt und nicht variiert, weil die Umgebungsfeuchte keinen signifikanten Einfluss auf die Kugelstoßfestigkeit hat. Die Ergebnisse der CIL-Tests sind jeweils auf der x-Achse abzulesen, die des Kugelfalltest auf der y-Achse. Sowohl der im Kugelfalltest ermittelte Mittelwert, als runde Messpunkte dargestellt und mit einer durchgezogenen Linie verbunden, als auch das 5%-Fraktil, als dreieckige Messpunkte dargestellt und mit einer gestrichelten Linie verbunden, sind aufgetragen. Es zeigt sich eine signifikante Übereinstimmung der nach den beiden Methoden ermittelten Kenngrößen. Das 5%-Fraktil liegt erwartungsgemäß etwas niedriger als der jeweils zugehörige Mittelwert der Fallhöhe. Das linke Messpunktepaar repräsentiert die Vergleichskeramik B1, die beiden rechten jeweils eines der Ausführungsbeispiele A1 und A2. In beiden Messverfahren erweisen sich die beiden Glaskeramiken mit dem erfindungsgemäßen Schichtaufbau als deutlich bruchfester als die Vergleichskeramik. So wurde für eine Kochfläche der Dicke 4 mm bei dem erfindungsgemäßen Ausführungsbeispiel A1 im Kugelfalltest eine Stoßfestigkeit von 46 ± 6 cm (Mittelwert ± Standardabweichung) und 37 cm (5%-Fraktil) ermittelt. Für das Referenzprodukt B1 aus einer transparenten, eingefärbten Glaskeramik mit HQMK als vorherrschende Kristallphase auch im Kern wurde demgegenüber nur 19 ± 3 cm (Mittelwert ± Standardabweichung) und 14 cm (5%-Fraktil) ermittelt. Die Fallhöhe konnte gegenüber dem Vergleichsbeispiel bei A2 um ca. 90% und bei A1 sogar um ca. 142% gesteigert werden. Den geforderten CIL-Grenzwert von 0,8 N für Umgebungsfeuchte 10% bzw. von 0,98 N für Umgebungsfeuchte 1% überschreiten beide erfindungsgemäßen Beispiele deutlich.

Aber nicht nur bei der Vergleichskeramik B1 mit HQMK als vorherrschende Kristallphase im Kern sondern auch bei bekannten, transluzenten oder opaken Glaskeramiken mit KMK als Hauptkristallphase liegt die Stoßfestigkeit nach definierter Vorschädigung in einem deutlich niedrigeren Bereich als bei der erfindungsgemäßen Glaskeramik bzw. dem glaskeramischen Substrat. Beispielsweise wurden auf die beschriebene Weise bei den nachfolgend in Tabelle 2 genannten Beispielen B2 und B3 im Kugelfalltest der vorbeschriebenen Art eine Fallhöhe von lediglich 29 ± 6 cm ermittelt.

Der CIL-Grenzwert von 0,8 N bei Umgebungsfeuchte 10% bzw. von 0,98 N bei Umgebungsfeuchte 1% entspricht einer mittleren Höhe im Kugelfalltest von etwa 32 cm und einerm 5%-Fraktil von etwa 26 cm. Bevorzugt beträgt die im Kugelfalltest an einer, wie vorstehend beschrieben, definiert vorgeschädigten, erfindungsgemäßen Glaskeramik ermittelte Kugelfallhöhe deshalb wenigstens 30 cm (Mittelwert) und/oder 25 cm (5%-Fraktil), und besonders bevorzugt wenigstens 40 cm (Mittelwert) und/oder 35 cm (5%-Fraktil).

Während die Erfassung der Stoßfestigkeit als Normanforderung für Kochfelder - es wird erneut auf die EN 60335, UL 858 oder CSA 22.2 verwiesen - unmittelbare Relevanz hat, besteht für die Biegefestigkeit als eine weitere Kenngröße zur Charakterisierung der mechanischen Festigkeit zwar keine normative Festlegung. Dennoch ist die Erfassung der Biegefestigkeit eine weitere geeignete Messgröße, anhand der eine Festigkeitserhöhung durch den erfindungsgemäßen Prozess nachgewiesen werden kann. Die in einigen Fällen deshalb zusätzlich durchgeführte Biegefestigkeitsprüfung erfolgt als Doppelringprüfung gemäß EN 1288 Teil 5 (R45). Eine Glaskeramik-Kochfläche der Dicke 4 mm in der erfindungsgemäßen Ausführung erzielt in der Biegefestigkeitsprüfung mit nachfolgender Auswertung nach dem Weibull-Modell eine charakteristische Biegefestigkeit von 236 MPa bei einem Weibullmodul von 6,0. Dies ist im Vergleich zu der Vergleichskeramik mit HQMK als vorherrschende Kristallphase im Kern gleicher Dicke mit einer charakteristischen Biegefestigkeit von 171 MPa bei einem Weibullmodul von 7,3 eine signifikante Steigerung und bestätigt die insgesamt festigkeitserhöhende Wirkung des erfindungsgemäßen Schichtaufbaus und der Kristallgehalte. Die Verwendung des Weibullmodells zur statistischen Auswertung von Festigkeitsmessungen ist in Fachkreisen allgemein bekannt, z. B. aus: W. Weibull, "A statistical theory of the strength of materials", Ingeniörsvetenskapsakademiens Handlingar Nr. 151, 1-45 (1939).

Auch wurde die Biegefestigkeit in dieser Weise zum Vergleich an B2 bestimmt. Der Befund bestätigt: Die Auswertung nach Weibull ergab einen Wert von 131 MPa, was sogar noch unterhalb des Wertes für die HQMK-Glaskeramik liegt.

Alle Analyseverfahren bestätigen also, dass die spezifische Festigkeit und insbesondere die für die Anwendung als Kochfläche sehr relevante spezifische Stoßfestigkeit bei der Glaskeramik des erfindungsgemäßen Substrates außerordentlich hoch ausfällt, was eine vergleichbare Gesamtbelastbarkeit wie bei den herkömmlichen 4 mm dicken Glaskeramikscheiben schon ab einer Dicke von nicht mehr als 3,0 mm ermöglicht.

Verantwortlich hierfür ist der spezifische Kristallschichtaufbau bzw. das Profil der Glaskeramik, dessen Bestimmung im Folgenden erläutert wird. Gemessen werden der KMK-Kristallphasenanteil und der HQMK- Kristallphasenanteil in Abhängigkeit von der Tiefe. Die Kristallphasenanteile werden hierin stets in Vol.-% angegeben und die mittleren Kristallitgrößen in nm. Die Kristallphasenanteile werden mittels Dünnschicht-XRD (Röntgenbeugung) an intakten Proben der Glaskeramiken oder mittels Pulver-XRD an daraus hergestellten Pulvern ermittelt. Die für die jeweilige Kristallphase (HQMK oder KMK) charakteristischen Reflexe wurden gemessen und der Kristallphasenanteil aus den integralen Flächen der Reflexe bestimmt. Diese integralen Flächen wurden in Relation zu denen von Standardproben mit bekanntem Phasengehalt gesetzt und so die Anteile der Kristallphasen und der sonstigen röntgenamorphen Phasen bestimmt. Die hierin angegebenen Kristallitgrößen wurden über die Reflexverbreiterung nach der sog. Scherrer-Formel in Relation zu einem Standard bestimmt. Die relativen Messfehler liegen erfahrungsgemäß bezüglich der Phasengehaltes bei 10% und bezüglich der Kristallitgröße bei 5%.

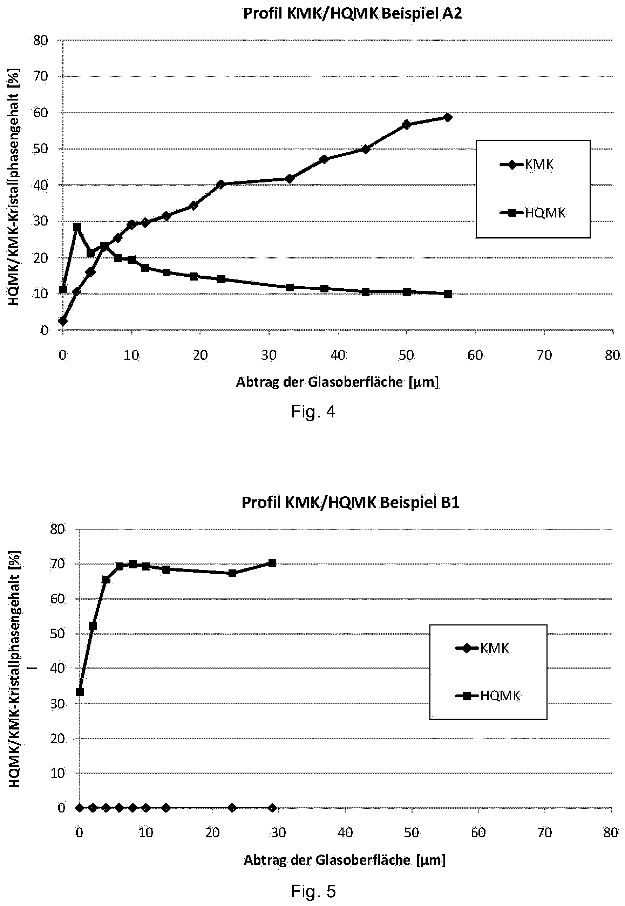

Die Figuren 3 bis 5 zeigen jeweils ein Diagramm oder Tiefenprofil der Kristallphasenanteile HQMK und KMK in Abhängigkeit von der Tiefe, gemessen an einem ersten Beispiel einer erfindungsgemäßen Probe A1 (Figur 3), einem zweiten Beispiel einer erfindungsgemäßen Probe A2 (Figur 4) und einem Vergleichsbeispiel einer Keramik B1 mit HQMK als vorherrschende Kristallphase im Kern (Figur 5). Die Kristallphasenanteile sind jeweils in y-Richtung in % und die Tiefe, ausgehend von der Oberfläche der Glaskeramikprobe, in x-Richtung in µm aufgetragen. Die Glaskeramiken wurden jeweils in streifendem Einfall unter 0,5° mittels Röntgenbeugung vermessen. Die Tiefeninformation einer derartigen Messung liegt erfahrungsgemäß bei etwa 2µm. Anschließend wurden die Proben sukzessive abpoliert und erneut mittels XRD vermessen um die entsprechenden Phasengehalte in tieferen Schichten zu ermitteln.

Die Diagramme zeigen, dass bei den Ausführungsbeispielen A1 und A2 der HQMK-Anteil in einem ersten Abschnitt zunächst leicht ansteigt. Dieser Anstieg ist auf die bekannte, wenige 100 nm bis maximal 1 µm dicke glasige Zone an der Oberfläche der Glaskeramik zurückzuführen, in der keine Kristallite vorliegen. Da die XRD-Messung aber in jedem Messschritt über eine Tiefeninformation von etwa 2µm integriert, fließt der Gehalt von HQMK innerhalb der ersten 2 µm in den Messwert an der Oberfläche ein, der demzufolge im Rahmen des Messfehlers nicht mit 0% bestimmt wird. In Richtung des Kerns nimmt der Anteil der HQMK-Phase dann jeweils sukzessive ab. Im Gegenzug nimmt der Anteil des KMK in Richtung des Kerns jeweils zu. Im Falle von A1 entspricht der Anteil des KMK bei etwa 76 µm dem Anteil des "Bulk-Wertes" von ca. 75%, der in 2000 µm Tiefe, bestimmt wird. Der HQMK ist bei 76 µm gleichzeitig auf den Bulk-Wert in 2000µm Tiefe von 0% abgefallen. Im Falle des Ausführungsbeispiels A2 fällt der Anteil an HQMK lediglich auf 10% ab, der Bulk-Wert in 2000 µm Tiefe wird hier bei etwa 56 µm erreicht. Entsprechend ist bei dieser Tiefe der Maximalwert für KMK mit 59% erreicht. Im Übrigen liegen in den Schichten sogenannte röntgenamorphen Phasen, also nicht mittels Röntgenbeugung erfassbare Phasen vor, zu denen insbesondere auch die Glasphase zählt.

Beide Ausführungsbeispiele zeigen, dass der Schnittpunkt der Kurven, die den HQMK- und den KMK-Phasenanteil repräsentieren, zwischen 0 und 10 µm und genauer zwischen 2 und 8 µm und damit jedenfalls unter 10 µm liegt. Mit anderen Worten hat der KMK-Kristallphasenanteil spätestens in einer Tiefe von 10 µm und darüber hinaus 50% der Summe der HQMK- und KMK-Kristallphasenanteile überstiegen.

Im Vergleichsbeispiel B1 ist hingegen deutlich zu erkennen, dass in dem Material kein KMK vorliegt und der HQMK seinen maximalen Bulk-Wert in 2000 µm Tiefe von 70% schon bei 29 µm erreicht.

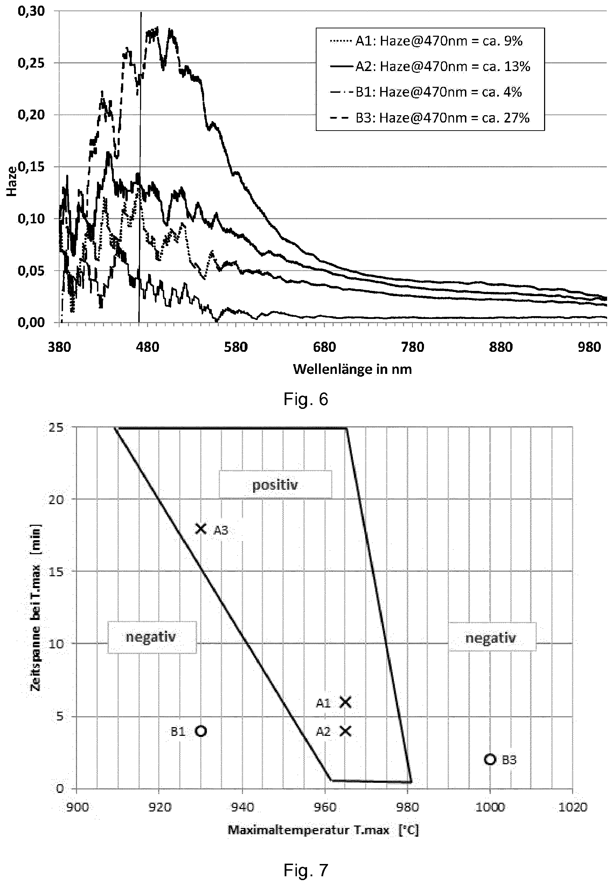

Gleichzeitig ist die erfindungsgemäße Glaskeramik trotz der KMK-Bildung im Kern transparent und damit mangels störender Streuzentren insbesondere auch für mehrfarbige Anzeigen grundsätzlich gut geeignet. Ermittelt wird die Transparenz mithilfe einer Streulichtmessung nach dem internationalen Standard ISO 14782: 1999(E), jeweils normiert auf eine 4 mm dicke Glaskeramik. In Figur 6 ist das Ergebnis dieser Streulichtmessung in einem Wellenlängenbereich von 380 nm bis 1000 nm in einem Diagramm dargestellt. Die Messung wurde an den beiden erfindungsgemäßen Proben A1 und A2 und zwei Vergleichsproben B1 und B3 durchgeführt. Während die Vergleichsprobe B1 mit HQMK als vorherrschende Kristallphase im Kern der Glaskeramik einen erwartungsgemäß niedrigen Streulichtanteil, hierin auch als "Haze" bezeichnet, von ca. 4% bei einer Wellenlänge von 470 nm aufweist, liegt der Wert für die transluzente Vergleichsprobe B3 mit KMK als vorherrschende Kristallphase im Kern der Glaskeramik bei sehr hohen ca. 27%. Dem gegenüber beträgt der maximale Streuanteil der Glaskeramiken A1 und A2 gemäß der Erfindung bei einer Wellenlänge von 470 nm ca. 9% bzw. ca. 13%, jeweils ermittelt an einen Fit der in Figur 6 dargestellten Messkurven. Auch übersteigt der maximale Streuanteil im gesamten Wellenlängenbereich von 400 nm bis 500 nm den Wert von 17 % nicht und liegt damit im Bereich der Transparenz.

Um die Eignung der Glaskeramik für mehrfarbige Anzeigen zu erlangen, beträgt der maximale Streulichtanteil ("haze"), ermittelt nach dem internationalen Standard ISO 14782: 1999(E), normiert auf eine 4 mm dicke Glaskeramik und bei einer Wellenlänge von 470 nm also vorzugsweise höchstens 15 %, besonderes bevorzugt höchstens 12 %.

Weiterhin bevorzugt übersteigt der maximale Streuanteil ("haze"), ermittelt nach dem internationalen Standard ISO 14782: 1999(E), normiert auf eine 4 mm dicke Glaskeramik, in einem Wellenlängenbereich von 400 nm bis 500 nm 20 %, besonders bevorzugt 17 %, nicht.

Neben der Transparenz muss die Glaskeramik unter Berücksichtigung einer guten Anzeigefähigkeit auch noch eine hinreichende Einfärbung aufweisen, d.h. im sichtbaren Wellenlängenbereich Transmissionsverluste durch Absorption bewirken. Die Einfärbung sollte insbesondere so dunkel sein, dass nicht leuchtende Objekte durch die LAS-Glaskeramik hindurch mit bloßem Auge nicht erkennbar, leuchtende Objekte hingegen sichtbar sind. Eine Messgröße, die diese Eigenschaft repräsentiert, ist die integrale Transmission τᵥᵢₛ im visuellen Spektralbereich. τᵥᵢₛ, auch als Y, "brightness" oder "luminance" bezeichnet, wird aus dem Transmissionsspektrum im Wellenlängenbereich 380 nm bis 780 nm berechnet. Hierzu wird das gemessene Spektrum mit dem Emissionsspektrum einer Standardlichtquelle (D65) und mit dem grünen Anteil des sogenannten "Tristimulus" des CIE Farbsystems gefaltet.

Für die integrale Transmission der erfindungsgemäßen Glaskeramik im visuellen Spektralbereich, normiert auf eine 4 mm dicke Glaskeramik, gilt bevorzugt: τᵥᵢₛ, 4mm ≤ 5%.

Diese Parametereinstellung stellt eine ausreichende Abdunklung der unter der Glaskeramik befindlichen, nicht leuchtenden Bauteile sicher.

Weiterhin beträgt die spektrale Transmission τ_{470nm, 4mm} der erfindungsgemäßen Glaskeramik, normiert auf eine 4 mm dicke Glaskeramik, bei einer Wellenlänge von 470 nm vorzugsweise mehr als 0,1 %.

Schließlich beträgt die spektrale Transmission τ_{550nm, 4mm} der erfindungsgemäßen Glaskeramik, normiert auf eine 4 mm dicke Glaskeramik, bei einer Wellenlänge von 550 nm bevorzugt mehr als 0,25 %.

Beide zuletzt genannten Parametereinstellungen stellen für sich eine verbesserte und gemeinsam eine besonders gute farbige Anzeigefähigkeit sicher. Die Erfindung vereinbart so erstmals bislang für unvereinbar gehaltenen Eigenschaften wie eine hohe Festigkeit einerseits und gute Anzeigefähigkeit, bedingt durch eine geringe Streuung und geeignete Transmissionseigenschaften andererseits. Sie eignet sich deshalb in besonderem Maße für Anwendungen mit hohem ästhetischen Anspruch wie Kochflächen oder Anzeige- und Bedienfelder. Dabei ermöglicht es die Erhöhung der Stoßfestigkeit des Materials, Kochflächen mit geringeren Materialstärken von beispielsweise 3 mm herzustellen, welche die nach EN 60335 bzw. UL 858 bzw. CSA 22.2 aufgestellten Anforderungen erfüllt.

Erzielt werden diese scheinbar teils gegenläufigen Eigenschaften durch ein eng abgestimmtes Zusammenspiel zwischen der Zusammensetzung der Glaskeramik einerseits und dem Keramisierungsverfahren andererseits.

Das erfindungsgemäße Verfahren zum Herstellen des erfindungsgemäßen glaskeramischen Substrates aus einem LAS-Glas mit vorstehender Zusammensetzung sieht ausgehend von der Glasschmelze die Schritte vor: Läutern der Glasschmelze, Formen des Grünglases unter Abkühlung der Schmelze, Unterziehen des so hergestellten Grünglases einem Keimbildungsschritt, anschließend einem Kristallwachstumsschritt, bei dem HQMK auf den Kristallkeimen aufwachsen, Unterziehen des der Gestalt vorkristallisierten glaskeramischen Zwischenerzeugnisses mit Hochquarzmischkristall (HQMK) als vorherrschende Kristallphase einem Kristallumwandlungsschritt, bei dem die HQMK-Kristallphase teilweise in eine KMK-Kristallphase umgewandelt wird, wobei der Kristallumwandlungsschritt mit einer Maximaltemperatur Tₘₐₓ und über eine Haltezeit t(Tₘₐₓ) dieser Maximaltemperatur in einem Temperatur-Zeit-Bereich durchgeführt wird, der von vier Geraden begrenzt wird, die die vier Eckpunkten mit den Wertepaaren (Tₘₐₓ = 910°C; t(Tₘₐₓ) = 25 Minuten), (Tₘₐₓ = 960°C; t(Tₘₐₓ) = 1 Minute), (Tₘₐₓ = 980°C; t(Tₘₐₓ) = 1 Minute) und (Tₘₐₓ = 965°C; t(Tₘₐₓ) = 25 Minuten) verbinden, wobei das Verfahren inklusive einer Abkühlung auf eine Temperatur von 780°C insgesamt weniger als 60 min benötigt.

Ausgehend von einem vorkristallisierten glaskeramischen Zwischenerzeugnis mit Hochquarzmischkristall (HQMK) als vorherrschende Kristallphase beginnt das erfindungsgemäße Verfahren entsprechend mit dem Kristallumwandlungsschritt. Und ausgehend von einem Grünglas beginnt das erfindungsgemäße Verfahren entsprechend mit dem Keimbildungsschritt, dem sich der Kristallwachstumsschritt und der Kristallumwandlungsschritt anschließen.

Die Glaskeramik-Zusammensetzung in Verbindung mit dem Herstellungsverfahren ermöglicht die Erzeugung des oben genannten Schichtaufbaus und der Kristallgehalte sowie der erfindungsgemäßen Transmissionscharakteristik und damit der vorteilhaften Materialeigenschaften. Die Hauptkristallphase der Glaskeramik besteht dann aus KMK, welcher im Zusammensetzungsbereich Li(_{1-2x-2y})MgₓZn_{y}AlSi₂O₆-Li(_{1-2x-2y})Mg₍ₓ₎Zn_{(y)}AlSi₄O₁₀ mit (0 ≤ x ≤ 0,5; 0 ≤ y ≤ 0,5 und 0 ≤ x+y ≤ 0,5) vorliegt.

Das erfindungsgemäße Keramisierungsprogramm zur Kristallumwandlung wird anhand von Figur 7 erläutert. Die Erfinder fanden heraus, dass Glaskeramiken mit der genannten Zusammensetzung nur dann die gewünschten Eigenschaften vereinbaren, wenn sie unter Bedingungen keramisiert werden, die innerhalb des in Figur 7 dargestellten trapezförmigen Temperatur-Zeit-Bereiches liegen, der von vier Geraden begrenzt wird, die von den vier Eckpunkten mit den in der folgenden Tabelle 1 angegebenen Wertepaaren (maximale Keramisierungstemperatur Tₘₐₓ; Haltezeit t(Tₘₐₓ)) liegen. Bevorzugte Werte sind ebenfalls in Tabelle 1 angegeben.

**Tabelle 1**

| | Tₘₐₓ [°C] | t(Tₘₐₓ) [min] |
|---|---|---|
| Eckpunkt 1 | 910, bevorzugt 920 | 25, bevorzugt 20 |
| Eckpunkt 2 | 960 | 1, bevorzugt 2 |
| Eckpunkt 3 | 980 | 1, bevorzugt 2 |
| Eckpunkt 4 | 965 | 25, bevorzugt 20 |

Beispielhaft sind in dem Diagramm gemäß Figur 7, in welchem die Haltezeit t(Tₘₐₓ) gegenüber der maximalen Keramisierungstemperatur Tₘₐₓ aufgetragen ist, die erfindungsgemäßen Keramiken A1 bis A3 und die außerhalb der Erfindung liegenden Vergleichsbeispiele B1 und B3 eingetragen. Der Temperatur-Zeit-Bereich der erfindungsgemäßen Keramisierungsparameter ist als trapezförmige Fläche umrahmt eingezeichnet, deren Ecken die Koordinaten aus Tabelle 1 aufweisen.

Bevorzugt ist das erfindungsgemäße Verfahren dadurch weitergebildet, dass das Grünglas oder das glaskeramisches Zwischenerzeugnis über ein Zeitdauer von höchstens 45 Minuten und besonders bevorzugt höchstens 30 Minuten von Raumtemperatur auf die Maximaltemperatur Tₘₐₓ erwärmt wird.

Der Vorteil dieser Weiterbildung ist, dass die für die Produkteigenschaften relevanten Keramisierungsbedingungen der Haltezeit t(Tₘₐₓ) und der maximalen Keramisierungstemperatur Tₘₐₓ, bei denen die Keramisierungsprozesse und vor allem die Phasenumwandlung besonders kontrolliert ablaufen, schnell erreicht werden und die Keramisierung nicht schon während der Aufwärmung und damit weniger kontrolliert von statten geht.

Bei dem zur Herstellung einer transparenten, hochfesten KMK enthaltenden Glaskeramik wurde im Vergleich zum Stand der Technik ein deutlich wirtschaftlicheres, da schnelleres Keramisierungsverfahren entwickelt. Dies ergibt sich beispielsweise aus dem Vergleich mit dem in der US 20140238971 A beschriebenen Verfahren. Während das erfindungsgemäße Verfahren inklusive der Zeitdauer der Abkühlung auf eine Temperatur von 780°C insgesamt weniger als 60 min, bevorzugt weniger als 50 min benötigt, dauern Keramisierungsverfahren, die im Stand der Technik beschrieben wurden, wenigsten 80 Minuten, um eine vergleichbare Temperatur im Bereich der sogenannten Abkühlkurve, d.h. der Phase nach der Maximaltemperatur, zu erreichen.

Durch die kurze Haltezeit bei Tₘₐₓ. ist dann garantiert, dass die KMK in einer Größenverteilung, einer mittleren Gesamtgröße und mit einem Phasenanteil entstehen, welche die hohe Festigkeit zusammen mit einer geringen Lichtstreuung und damit erfindungsgemäßen Transmission ermöglichen. Dies ist umso überraschender, als dass diese erfindungsgemäßen Keramisierungsbedingungen auch mit einem wirtschaftlicheren und schnelleren Verfahren kombiniert werden konnten, als es im Stand der Technik beschrieben ist.

Es scheint auch, dass SnO₂ als Keimbildner entscheidend in den Kristallbildungs- und Wachstumsprozess eingreift. So wurde beobachtet, dass die Umwandlung von einer Sn-haltigen ungefärbten transparenten GK in eine opake Glaskeramik sich deutlich verzögert ggü. einer As-geläuterten GK vollzieht. Dies scheint auch bei dem erfindungsgemäßen Material und Prozess der Fall zu sein, weshalb es möglich ist, auch im Wellenlängenbereich von 380 nm - 500 nm transparente Glaskeramiken darzustellen die gleichzeitig einen hohen Keatitphasenanteil haben. Dies ist dem verzögerten Kristallwachstum und den resultierenden kleinen Kristallitgrößen geschuldet.

Die Herstellung kann noch prozesssicherer gestaltet und die geforderten Produkteigenschaften können verfeinert werden, wenn die im Folgenden diskutierten, bevorzugten Parameter eingehalten werden. Die Glaskeramik ist vorzugsweise aus einem bis auf unvermeidliche Spuren Arsen- und Antimon-freien LAS-Glas erzeugt und weist wenigstens 0,1 Gew.-% SnO₂ auf.

Grundsätzlich ist der Einsatz von SnO₂ als umweltverträgliches Reduktionsmittel (im Gegensatz zu Sb₂O₃ oder AS₂O₃) während der Läuterung und als Redoxpartner für ein Farboxid, wie beispielsweise V₂O₅ und/oder Fe₂O₃, zur Einfärbung der Glaskeramik aus der DE 199 39 787 C2 bekannt. Insbesondere lassen sich hervorragende Farbwirkungen und Blasenqualitäten in Kombination mit einer Hochtemperaturläuterung oberhalb 1700°C erzielen.

Im Hinblick auf die Einfärbung besonders bevorzugt ist, wenn für die Komponenten Fe₂O₃ und V₂O₅ in der Zusammensetzung die folgende Bedingung eingehalten wird: 1 < Fe₂O₃ / V₂O₅ < 8.

Auch hinsichtlich der Einfärbung sind die Keramisierungsbedingungen Tₘₐₓ. und t(Tₘₐₓ) in optimaler Weise so gewählt, dass ein Nachdunkeln der bereits gefärbten Glaskeramik nicht auftritt. Zusammen mit kurzer Keimbildnerausscheidungszeit, kurzer Volumenkristallisation wird ein τᵥᵢₛ von 0,5% nicht unterschritten, obwohl drei Bereiche durchlaufen werden, die zur Einfärbung und Streuung beitragen können. Schließlich wird eine Streuung vermieden, da die kurze Keramisierungsdauer den geringfügig streuenden Zustand quasi "einfriert".

Die weiteren Farboxide in der Zusammensetzung umfassen wenigstens eine Substanz aus der Gruppe bestehend aus den Elementen Cr, Mn, Co, Ni, Cu, Se, Mo, W, deren Oxide, und Metalloxide der seltenen Erden. Insbesondere sind dies Cr₂O₃, MnO₂, MnO, CoO, Co₂O₃, NiO, Ni₂O₃, CuO, Cu₂O, SeO, weitere Metalloxide der seltenen Erden und Molybdänverbindungen. Mit diesen färbenden Substanzen lassen sich im Bedarfsfall die Farborte und/oder Transmissionswerte noch gezielter einstellen. Der Gehalt an Cr₂O₃ beträgt < 100 ppm, um die Transmission, insbesondere im Spektralbereich 380 nm bis 500 nm nicht zu stark einzuschränken, was sich andernfalls negativ auf die Anzeigefähigkeit für weiße und blaue LEDs oder Farbdisplays auswirken würde.

Vorteilhafterweise beträgt der ZnO-Gehalt wenigstens 0,2 Gew.-%. ZnO ist vorteilhaft in Bezug auf Anpassung des Brechungsindex zwischen Kristallphase und Glasphase und somit positiv für die Transmissionseigenschaften durch Minimierung der Streuung. Außerdem dient die Zn-induzierte Gahnitbildung bei nicht eingefärbten Glaskeramiken der Verbesserung des Weißwertes L*.

Der MgO-Gehalt beträgt vorzugsweise wenigstens 0,1 Gew.-% und besonders bevorzugt wenigstens 0,25 Gew.-%. Die Obergrenze des MgO-Gehaltes liegt bei vorzugsweise 1 Gew.-%.

Vorzugsweise beträgt Al₂O₃-Gehalt 19 - 23 Gew.-%. Der Al₂O₃ -Gehalt spielt bei der Einstellung des Al/Si-Verhältnisses im KMK sowie im HQMK eine entscheidende Rolle. Hierdurch lässt sich beispielsweise der thermische Ausdehnungskoeffizient der Glaskeramik einstellen. Al₂O₃ hat weiterhin einen positiven Effekt auf die chemische Beständigkeit der Glaskeramik.

Weiterhin hat es sich als vorteilhaft herausgestellt, wenn der TiO2-Gehalt 2,5 - 4 Gew.-% beträgt.

Der ZrO₂-Gehalt beträgt bevorzugt 0,5 - 1,9 Gew.-%, weiterhin bevorzugt 0,5 - 1,8 Gew.-% und besonders bevorzugt 0,5 - 1,7 Gew.-%.

In diesen Grenzen für TiO₂ und ZrO₂ ist das Keimbildungsverhalten besonders günstig. Es muss zum einen gewährleistet werden, dass genügend Keimbildner (Zirkoniumtitanat) vorhanden ist, um eine zügige und homogene Keramisierung zu gewährleisten. Andererseits führen bewirken zu hohe Gehalte an TiO₂ und insbesondere ZrO₂ zu einer Entglasung oder spontanen Keimbildung bereits bei der Formgebung des Grünglases, die einer homogenen Keramisierung und guter Transparenz ebenfalls zuwiderläuft.

Bevorzugt weist das glaskeramische Substrat eine glasige Oberflächenzone auf der Gradientenschicht mit einer Dicke von 50 - 1000 nm, bevorzugt 50-800 nm, besonders bevorzugt 300 - 800 nm, auf. Diese Schicht, die durch Diffusionsprozesse entsteht, insbesondere durch Diffusion von Li in den Bulk oder Kern, und damit eine Li-Anreicherung im Inneren und eine Verarmung in der Oberflächenzone des Kristalls bewirkt, ist insbesondere im Hinblick auf chemische Angriffsprozesse positiv zu bewerten.

Es hat sich als vorteilhaft herausgestellt, wenn der Kristallanteil aller kristallinen Phasen im Kern höchstens 90%, bevorzugt höchstens 85%, besonders bevorzugt höchstens 80% beträgt. Eine vorteilhafte Untergrenze kann mit wenigstens 69 % angegeben werden. Weitere kristalline Nebenphasen sind HQMK, Rutil, Gahnit und Zirconiumtitanat. Es hat sich als vorteilhaft herausgestellt, wenn der Keatitgesamtanteil kleiner 80% ist.

Der Kristallitanteil ist für die Einstellung der Eigenschaften der Glaskeramik, insbesondere die thermische Ausdehnung, wichtig. Da KMK eine höhere thermische Ausdehnung als HQMK zeigt, ist insbesondere der KMK Anteil in der genannten Weise zu begrenzen.

Damit eine ausreichende Transparenz des glaskeramischen Substrates sichergestellt ist, sind die Kristallite der KMK-Phase im Kern der Glaskeramik vorzugsweise <130 nm, ermittelt wie vorstehend durch XRD-/Röntgenbeugungsmessung..

Der thermische Ausdehnungskoeffizient α_{20/700} der resultierenden Glaskeramik beträgt bevorzugt weniger als 1.3 10⁻⁶/K. Damit liegen sie im Bereich bekannter transluzenter LAS-Glaskeramiken mit KMK als Hauptkristallphase.

Die Temperaturunterschiedsfestigkeit des erfindungsgemäßen glaskeramischen Substrates liegt vorzugsweise bei > 800 °C. Die Temperaturunterschiedsfestigkeit transluzenter KMK-Glaskeramiken liegt demgegenüber bei typischerweise 700°C.

Die Temperaturunterschiedsfestigkeit (TUF) beschreibt die Widerstandsfähigkeit eines plattenförmigen Gegenstandes aus Glas oder Glaskeramik gegenüber örtlichen Temperaturgradienten. Im Zusammenhang mit der Anwendung als Kochfläche ist die Prüfung der TUF wie folgt definiert: Als Messprobe wird ein quadratischer Teilausschnitt der Größe 250 mm x 250 mm der zu prüfenden Glaskeramikscheibe horizontal auf einem anwendungstypischen Strahlungsheizkörper mit einem Außendurchmesser von 180 ± 3 mm dicht aufliegend und asymmetrisch so positioniert, dass die vier Seitenmitten der Messprobe um 25 ± 2 mm, 35 ± 2 mm, 35 ± 2 mm, 45 ± 2 mm über den äußeren Rand des Heizkörpers hinausragen. Als Strahlungsheizkörper geeignet ist beispielsweise der Heizkörper Typ 200N8-D2830R der Fa. Ceramaspeed Ltd. mit den Kenndaten 2300 W / 220 V. Wird der Heizkörper betrieben, entsteht ein Temperaturgradient zwischen dem beheizten Bereich und dem kalten äußeren Rand der Messprobe. Der Aufheizvorgang des Heizkörpers wird so gesteuert, dass nach 5,0 ± 0,5 Minuten Bruch aufgrund des Temperaturgradienten auftritt. Die hierbei erreichte Maximaltemperatur auf der dem Heizkörper gegenüberliegenden Oberfläche der Messprobe wird als Kennwert der TUF registriert. Aufgrund des statistischen Charakters der TUF wird diese Prüfung an einer Serie von mindestens 10 Proben ausgeführt. Als TUF des Prüfloses wird der Mittelwert der Messwertverteilung bestimmt.

Es ist bekannt, dass die Festigkeit einer Platte aus Glas oder Glaskeramik gegenüber mechanisch oder thermisch erzeugten Zugspannungen unter anderem bestimmt wird von mehr oder weniger zufälligen Oberflächenbeschädigungen. Im Zusammenhang mit der Anwendung als Kochfläche ist davon auszugehen, dass die Platte aus Glas oder Glaskeramik im Laufe der praktischen Benutzung, insbesondere durch abrasive Reinigung, Kochgeschirre etc., Oberflächenbeschädigungen erfährt. Eine Aussage zur TUF, sofern diese relevant für den bestimmungsgemäßen Gebrauch sein soll, setzt daher zwingend eine Vorverletzung der Messprobe voraus, die den Oberflächenbeschädigungen nach praxisüblicher Benutzung entspricht. Dies kann erfahrungsgemäß durch Schmirgelung der Oberfläche der Messprobe mit SiC-Schleifpapier der Körnung 220 unter einem Anpressdruck von 1,2 N/cm² erreicht werden. Dem Fachmann ist geläufig, dass die Schmirgelung auf das Bruchgeschehen nur dann voll wirksam ist, wenn die Schmirgelung insbesondere in denjenigen Bereichen erfolgt, die während der Prüfung Zugspannungen ausbilden, und zwar in einer Schmirgelrichtung, die senkrecht zur jeweiligen Hauptspannungsrichtung liegt. Dies schließt insbesondere eine Schmirgelung des kalten Randes der Messprobe im Bereich ihrer Seitenmitten und senkrecht zu ihren Außenkanten ein.

Das erfindungsgemäße glaskeramische Substrat der vorstehend beschriebenen Art kommt besonders bevorzugt als Abdeckung für Heizelemente, insbesondere als als Koch- oder Bratfläche, als Weißware, als Heizkörperabdeckung, als Grillfläche oder Kaminsichtscheibe, Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung, als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Wafersubstrat, als transluzenter Gegenstand mit UV-Schutz, als Material für Gehäusekomponenten beispielsweise von elektronischen Geräten und/oder Abdeckgläser für IT wie Mobiltelefone, Laptops, Scannergläser usw. oder als Fassadenplatte, Brandschutzverglasung und Komponente für ballistischen Schutz zur Anwendung.

Nach den Untersuchungen der Erfinder kann es bereits genügen, dass nur eine Zusammensetzungskomponente, die Maximaltemperatur während der Keramisierung oder die Keramisierungsdauer aus dem durch die Erfindung festgelegten Bereich herausläuft, um die geforderten Eigenschaften der erfindungsgemäßen Glaskeramik bzw. des daraus bestehenden glaskeramischen Substrates zu verfehlen. Anhand der folgende Tabelle 2 wird ersichtlich welchen Einfluss die zusammenwirkenden Parameter auf das Resultat haben.

Die Tabelle 2 stellt die Ausführungsbeispiele A1 und A2, die Referenzbeispiele A0 und A3 sowie die Vergleichsbeispielen B1 bis B4 gegenüber. Unter der Zusammensetzung der LAS-Glaskeramik sind die relevanten Parameter der Keramisierung, nämlich maximale Keramisierungstemperatur Tₘₐₓ in °C, Durchlaufzeit "DLZ" in Minuten, Haltezeit auf der maximalen Keramisierungstemperatur t@Tₘₐₓ in Minuten und Heizrate auf Tₘₐₓ in Kelvin/Minute wiedergegeben. Die Parameter Durchlaufzeit, Haltezeit und Heizrate sind jeweils zunächst als "ist"-Werte angegeben, das heißt konkret so, wie die Keramisierung des jeweiligen Beispiels durchgeführt wurde. Darunter folgen die "bevorzugten Bereiche" dieser drei Parameter, innerhalb derer die Keramisierung für die konkrete Zusammensetzung und die konkrete maximale Keramisierungstemperatur der jeweiligen erfindungsgemäßen Beispiele zum Erfolg führt. Darunter sind die nach den vorstehend erläuterten Verfahren gemessenen Erzeugnisparameter aufgelistet, in folgernder Reihenfolge: Phasengehalt der HQMK-Phase in %, Phasengehalt der KMK-Phase in %, durchschnittliche Kristallitgröße der HQKM in nm, durchschnittliche Kristallitgröße der KMK in nm (die Phasengehalte, sowie die Kristallitgrößen beziehen sich jeweils auf den Kern (Bulk) der Glaskeramik, an pulverförmigen Proben gemessen); optische Transmissionseigenschaften subjektiv (gefärbt, ungefärbt), gemessene Transmission bei 470 nm Wellenlänge, normiert auf eine 4 mm dicke Glaskeramik, in %, gemessene integrale Transmission τᵥᵢₛ im visuellen Spektralbereich, normiert auf eine 4 mm dicke Glaskeramik, in %; der maximale Streuanteil ("Haze"), normiert auf eine 4 mm dicke Glaskeramik, bei einer Wellenlänge von 470 nm; der thermischer Ausdehnungskoeffizient α_{20/700°C} zwischen 20 und 700°C in 1/K; die Temperaturunterschiedsfestigkeit TUF in °C; und die Stoßfestigkeit, ermittelt im Kugelfalltest und angegeben als als Mittelwert und als 5%-Fraktil, jeweils in cm, sowie ermittelt im CIL-Verfahren und angegeben in N.

Alle Ausführungsbeispiele sind KMK-bildend im Sinne der Erfindung, das heißt sie haben einen dominierenden KMK-Phasenanteil im Kern. Dies gilt auch für die Vergleichsbeispiele B2 und B3. Die übrigen Vergleichsbeispiele bilden kein oder zu geringfügig KMK. Beispiele B2 und B3 zeigen hingegen, dass die Kristalle zu groß werden, was auf die maximale Keramisierungstemperatur, verbunden mit der Haltedauer zurückgeführt wird. Daraus resultiert, dass diese Glaskeramiken nicht ausreichend transparent sondern vielmehr transluzent sind. Beispiel B1 zeigt, dass aufgrund der zu geringen Ausbildung von KMK die festigkeitssteigernde Wirkung ausbleibt. Das Beispiel büßt deshalb an Anzeigefähigkeit ein.

**Tabelle 2**

| | | **A (Ausführungsbeispiele)** | | | |
|---|---|---|---|---|---|
| **Beispiel** | | **A0** | **A1** | **A2** | **A3** |
| **Zusammensetzung** | | | | | |
| Al2O3 | % | 20,780 | 20,780 | 20,780 | 20,500 |
| As2O3 | % | | | | |
| BaO | % | 2,260 | 2,260 | 2,260 | 2,380 |
| CaO | % | 0,430 | 0,430 | 0,430 | 0,360 |
| CeO2 | % | | | | |
| Cr2O3 | % | | | | 0,030 |
| F | % | | | | |
| Fe2O3 | % | 0,094 | 0,094 | 0,094 | 0,088 |
| K2O | % | 0,260 | 0,260 | 0,260 | 0,220 |
| Li2O | % | 3,900 | 3,900 | 3,900 | 3,830 |
| MgO | % | 0,310 | 0,310 | 0,310 | 0,200 |
| MnO2 | % | | | | |
| Na2O | % | 0,620 | 0,620 | 0,620 | 0,500 |
| Nd2O3 | % | | | | |
| NiO | % | | | | |
| P2O5 | % | 0,092 | 0,092 | 0,092 | 0,093 |
| Sb2O3 | % | 0,018 | 0,018 | 0,018 | |
| SiO2 | % | 64,840 | 64,840 | 64,840 | 65,500 |
| SnO2 | % | 0,260 | 0,260 | 0,260 | 0,290 |
| SrO | % | 0,017 | 0,017 | 0,017 | |
| TiO2 | % | 3,120 | 3,120 | 3,120 | 3,030 |
| V2O5 | % | 0,025 | 0,025 | 0,025 | 0,016 |
| ZnO | % | 1,490 | 1,490 | 1,490 | 1,500 |
| ZrO2 | % | 1,410 | 1,410 | 1,410 | 1,380 |
| SUMME | | 99,926 | 99,926 | 99,926 | 99,917 |

| | | **B (Gegenbeispiele)** | | | |
|---|---|---|---|---|---|
| **Beispiel** | | **B1** | **B2 (712-8)** | **B3 (712-6)** | **B4** |
| **Zusammensetzung** | | | | | |
| Al2O3 | % | 20,780 | 20,780 | 20,780 | 22,000 |
| As2O3 | % | | | | |
| BaO | % | 2,260 | 2,260 | 2,260 | 1,180 |
| CaO | % | 0,430 | 0,430 | 0,430 | 0,035 |
| CeO2 | % | | | | |
| Cr2O3 | % | | | | |
| F | % | | | | |
| Fe2O3 | % | 0,094 | 0,094 | 0,094 | 0,014 |
| K2O | % | 0,260 | 0,260 | 0,260 | 0,300 |
| Li2O | % | 3,900 | 3,900 | 3,900 | 3,780 |
| MgO | % | 0,310 | 0,310 | 0,310 | 0,720 |
| MnO2 | % | | | | |
| Na2O | % | 0,620 | 0,620 | 0,620 | 0,380 |
| Nd2O3 | % | | | | |
| NiO | % | | | | |
| P2O5 | % | 0,092 | 0,092 | 0,092 | 1,470 |
| Sb2O3 | % | 0,018 | 0,018 | 0,018 | |
| SiO2 | % | 64,840 | 64,840 | 64,840 | 65,500 |
| SnO2 | % | 0,260 | 0,260 | 0,260 | 0,300 |
| SrO | % | 0,017 | 0,017 | 0,017 | |
| TiO2 | % | 3,120 | 3,120 | 3,120 | 2,090 |
| V2O5 | % | 0,025 | 0,025 | 0,025 | |
| ZnO | % | 1,490 | 1,490 | 1,490 | |
| ZrO2 | % | 1,410 | 1,410 | 1,410 | 2,230 |
| SUMME | | 99,926 | 99,926 | 99,926 | 99,999 |

| | | **A (Ausführungsbeispiele)** | | | |
|---|---|---|---|---|---|
| **Beispiel** | | **A0** | **A1** | **A2** | **A3** |
| **Parameter der Keramisierung** | | | | | |
| Tmax. | °C | 930 | 965 | 965 | 930 |
| DLZ (ist) | min | 139,4 | 45,4 | 45,4 | 139,4 |
| t@Tmax. (ist) | min | 18 | 6 | 4 | 18 |
| Heizrate auf Tmax. (ist) | K/min | 25 | 30 | 18 | 25 |
| DLZ (bevorzugter Bereich) | min | < 150 | < 50 | < 50 | < 150 |
| t@Tmax. (bevorzugter Bereich) | min | < 25 | < 10 | < 8 | < 25 |
| Heizrate auf Tmax. (bevorzugter Bereich) | K/min | > 15 | > 3 | > 10 | > 15 |
| | | | | | |

| **Gefüge im Volumen / bulk** | | | | | |
|---|---|---|---|---|---|
| Phasengehalt HQMK | % | 15 | - | 12 | 21 |
| Phasengehalt KMK | % | 57 | 78 | 57 | 53 |
| Kristallitgröße HQMK | nm | n.b. | | n.b. | n.b. |
| Kristallitgröße KMK | nm | 128 | | 128 | 128 |
| | | | | | |

| **Transmission (bezogen auf Dicke** 4 **n** | | | | | |
|---|---|---|---|---|---|
| @ 470 nm | % | 0,360% | 0,450% | 0,370% | |
| @ 400-500 nm | % | | | | |
| τᵥᵢₛ | | 1,200% | 1,500% | 1,300% | |
| | | | | | |

| **Haze** | | | | | |
|---|---|---|---|---|---|
| @ 470 nm | | | 9% | 13% | |
| | | | | | |
| α₂₀₋₇₀₀ | ppm/K | 0,18 | 1,08 | 0,68 | |
| | | | | | |
| TUF | °C | | > 800°C | > 800°C | |
| | | | | | |

| **Stoßfestigkeit** | | | | | |
|---|---|---|---|---|---|
| Mittelwert | cm | 48,3 ± 3,8 | 46,2 ± 5,6 | 36,0 ± 3,8 | |
| 5%-Fraktil | cm | 42 | 37 | 30 | |
| | | | | | |
| **CIL bei UF 10%** | N | > 1,00 | 0,98 ± 0,06 | 0,84 ± 0,07 | |
| **CIL bei UF 1%** | N | 1,75 | 1,20 | 1,03 | 1,26 |

| | | **B (Gegenbeispiele)** | | | |
|---|---|---|---|---|---|
| **Beispiel** | | **B1** | **B2 (712-8)** | **B3 (712-6)** | **B4** |
| **Parameter der Keramisierung** | | | | | |
| Tmax. | °C | 930 | 1120 | 1000 | 930 |
| DLZ (ist) | min | 45,4 | 120,0 | 120,0 | 139,4 |
| t@Tmax. (ist) | min | 4 | 1 | 1 | 18 |
| Heizrate auf Tmax. (ist) | K/min | 15 | 40 | 40 | 25 |
| DLZ (bevorzugter Bereich) | min | | | | |
| t@Tmax. (bevorzugter Bereich) | min | | | | |
| Heizrate auf Tmax. (bevorzugter Bereich) | K/min | | | | |
| | | | | | |

| **Gefüge im Volumen / bulk** | | | | | |
|---|---|---|---|---|---|
| Phasengehalt HQMK | % | 69 | - | - | 57 |
| Phasengehalt KMK | % | 3 | 82 | 81 | 7 |
| Kristallitgröße HQMK | nm | 51 | - | - | |
| Kristallitgröße KMK | nm | n.b. | 164 | 138 | |
| | | | | | |

| **Transmission (bezogen auf Dicke 4 n** | | | | | |
|---|---|---|---|---|---|
| @ 470 nm | % | 0,440% | 0,000% | 0,000% | |
| @ 400-500 nm | % | | | | |
| τᵥᵢₛ | | 1,500% | 0,000% | | |
| | | | | | |

| **Haze** | | | | | |
|---|---|---|---|---|---|
| @ 470 nm | | 4% | | 27% | |
| | | | | | |
| α₂₀₋₇₀₀ | ppm/K | 0,11 | 1,29 | 1,29 | |
| | | | | | |
| TUF | °C | > 800°C | 550°C | 500°C | |
| | | | | | |

| **Stoßfestigkeit** | | | | | |
|---|---|---|---|---|---|
| Mittelwert | cm | 19,0 ± 2,7 | 29,0 ± 6,0 | 29,0 ± 6,0 | 21,2 ± 7,0 |
| 5%-Fraktil | cm | 15 | 18 | 18 | 10 |
| | | | | | |
| **CIL bei UF 10%** | N | 0,69 ± 0,05 | | | |
| **CIL bei UF 1%** | N | 0,84 | | | |

## Patentansprüche

1. Glaskeramisches Substrat aus einer transparenten, eingefärbten LAS-Glaskeramik mit der folgenden Zusammensetzung (in Gew.%):
| | |
|---|---|
| Al₂O₃ | 18 - 23 |
| Li₂O | 3,0 - 4,2 |
| SiO₂ | 60 - 69 |
| ZnO | 0 - 2 |
| Na₂O + K₂O | 0,2 - 1,5 |
| MgO | 0 - 1,5 |
| CaO + SrO + BaO | 0 - 4 |
| B₂O₃ | 0 - 2 |
| TiO₂ | 2,3 - 4 |
| ZrO₂ | 0,5 - 2 |
| P₂O₅ | 0 - 3 |
| SnO₂ | 0 - < 0,6 |
| Sb₂O₃ | 0 - 1,5 |
| AS₂O₃ | 0 - 1,5 |
| TiO₂ + ZrO₂ + SnO₂ | 3,8 - 6 |
| V₂O₅ | 0,01 - 0,06 |
| Fe₂O₃ | 0,03 - 0,2 |
| Cr₂O₃ | < 100 ppm |
und gegebenenfalls weitere Farboxide, in Summe bis maximal 1,0 Gew.-%,
mit einer Gradientenschicht und einem darunter liegenden Kern,
wobei die LAS-Glaskeramik im Kern Keatitmischkristall (KMK) als vorherrschende Kristallphase und in der Gradientenschicht Hochquarzmischkristall (HQMK) als vorherrschende Kristallphase aufweist und
wobei der KMK-Kristallphasenanteil in jeder Tiefe ≥ 20 µm 50% der Summe der HQMK- und KMK-Kristallphasenanteile übersteigt.

2. Glaskeramisches Substrat nach Anspruch 1,
**gekennzeichnet durch,**
eine Bruchfestigkeit der Glaskeramik, ausgedrückt in einem CIL-Wert von wenigstens 0,8 N bei einer Umgebungsfeuchte von 10% und/oder einem CIL-Wert von wenigstens 0,98 N bei einer Umgebungsfeuchte von 1%.

3. Glaskeramisches Substrat nach einem der vorstehenden Ansprüche,
**dadurch gekennzeichnet,**
**dass** das Tiefenprofil der HQMK- und KMK-Kristallphasenanteile und/oder die Festigkeit durch Phasenumwandlung von HQMK- in KMK-Kristalle beim Keramisieren mit einer Maximaltemperatur Tₘₐₓ und über eine Haltezeit t(Tₘₐₓ) dieser Maximaltemperatur in einem Temperatur-Zeit-Bereich durchgeführt wird, der von vier Geraden begrenzt wird, die die vier Eckpunkten mit den Wertepaaren (Tₘₐₓ = 910°C; t(Tₘₐₓ) = 25 Minuten), (Tₘₐₓ = 960°C; t(Tₘₐₓ) = 1 Minute), (Tₘₐₓ = 980°C; t(Tₘₐₓ) = 1 Minute) und (Tₘₐₓ = 965°C; t(Tₘₐₓ) = 25 Minuten) verbinden, wobei das Verfahren inklusive einer Abkühlung auf eine Temperatur von 780°C insgesamt weniger als 60 min benötigt.

4. Glaskeramisches Substrat nach einem der vorstehenden Ansprüche,
**dadurch gekennzeichnet,**
**dass** der maximale Streuanteil ("Haze"), normiert auf eine 4 mm dicke Glaskeramik, bei einer Wellenlänge von 470 nm höchstens 15%, vorzugsweise höchstens 12 %, beträgt.

5. Glaskeramisches Substrat nach einem der vorstehenden Ansprüche,
**dadurch gekennzeichnet,**
**dass** der maximale Streuanteil, normiert auf eine 4 mm dicke Glaskeramik, in einem Wellenlängenbereich von 400 nm bis 500 nm 20 %, vorzugsweise 17 %, nicht übersteigt.

6. Glaskeramisches Substrat nach einem der vorstehenden Ansprüche,
**dadurch gekennzeichnet,**
**dass** die Glaskeramik aus einem bis auf unvermeidliche Spuren Arsen- und Antimon-freien LAS-Glas erzeugt ist, welches wenigstens 0,1 Gew.-% SnO₂ enthält.

7. Glaskeramisches Substrat nach einem der vorstehenden Ansprüche,
**gekennzeichnet durch**
die Bedingung 1 < Fe₂O₃ / V₂O₅ < 8.

8. Glaskeramisches Substrat nach einem der vorstehenden Ansprüche,
**dadurch gekennzeichnet,**
**dass** die weiteren Farboxide wenigstens eine Substanz aus der Gruppe bestehend aus den Elementen Cr, Mn, Co, Ni, Cu, Se, Mo, W, deren Oxide, und Metalloxide der seltenen Erden umfassen.

9. Glaskeramisches Substrat nach einem der vorstehenden Ansprüche,
**dadurch gekennzeichnet,**
**dass** die integrale visuelle Transmission im Sichtbaren, normiert auf eine 4 mm dicke Glaskeramik, τ_{vis, 4mm} <= 5% beträgt.

10. Glaskeramisches Substrat nach einem der vorstehenden Ansprüche,
**dadurch gekennzeichnet,**
**dass** die spektrale Transmission, normiert auf eine 4 mm dicke Glaskeramik, bei einer Wellenlänge von 470 nm > 0,1 % und/oder bei einer Wellenlänge von 550 nm > 0,25 % beträgt.

11. Glaskeramisches Substrat nach einem der vorstehenden Ansprüche,
**gekennzeichnet durch**
eine glasige Oberflächenzone auf der Gradientenschicht mit einer Dicke von 300 - 1000 nm, bevorzugt 300 - 800 nm.

12. Glaskeramisches Substrat nach einem der vorstehenden Ansprüche,
**dadurch gekennzeichnet,**
**dass** der Kristallanteil im Kern höchstens 82%, bevorzugt höchstens 80%, besonders bevorzugt höchstens 76 % beträgt.

13. Verwendung eines glaskeramischen Substrates nach einem der vorstehenden Ansprüche als Abdeckung für Heizelemente, insbesondere als Koch- oder Bratfläche, als Weißware, als Heizkörperabdeckung, als Grillfläche, als Kaminsichtscheibe, als Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung, als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten, als Wafersubstrat, als transluzenter Gegenstand mit UV-Schutz, als Material für Gehäusekomponenten beispielsweise von elektronischen Geräten und/oder Abdeckgläser für IT wie Mobiltelefone, Laptops, Scannergläser usw., als Fassadenplatte, als Brandschutzverglasung oder als Komponente für ballistischen Schutz.

14. Keramisierungsverfahren zur Herstellung eines glaskeramischen Substrates nach einem der Ansprüche 1 bis 12, bei dem ein vorkristallisiertes glaskeramisches Zwischenerzeugnis mit Hochquarzmischkristall (HQMK) als vorherrschende Kristallphase auf Basis einer Li₂O-Al₂O₃-SiO₂-Glaszusammensetzung mit (in Gew.%):
| | |
|---|---|
| Al₂O₃ | 18 - 23 |
| Li₂O | 3,0 - 4,2 |
| SiO₂ | 60 - 69 |
| ZnO | 0 - 2 |
| Na₂O + K₂O | 0,2 - 1,5 |
| MgO | 0 - 1,5 |
| CaO + SrO + BaO | 0 - 4 |
| B₂O₃ | 0 - 2 |
| TiO₂ | 2,3 - 4 |
| ZrO₂ | 0,5 - 2 |
| P₂O₅ | 0 - 3 |
| SnO₂ | 0 - < 0,6 |
| Sb₂O₃ | 0 - 1,5 |
| AS₂O₃ | 0 - 1,5 |
| TiO₂ + ZrO₂ + SnO₂ | 3,8 - 6 |
| V₂O₅ | 0,01 - 0,06 |
| Fe₂O₃ | 0,03 - 0,2 |
| Cr₂O₃ | < 100 ppm |
und gegebenenfalls weitere Farboxide, in Summe bis maximal 1,0 Gew.-%, einem Kristallumwandlungsschritt unterzogen wird, bei dem die HQMK-Kristallphase teilweise in eine KMK-Kristallphase umgewandelt wird, wobei der Umwandlungsschritt mit einer Maximaltemperatur Tₘₐₓ und über eine Haltezeit t(Tₘₐₓ) dieser Maximaltemperatur in einem Temperatur-Zeit-Bereich durchgeführt wird, der von vier Geraden begrenzt wird, die die vier Eckpunkten mit den Wertepaaren (Tₘₐₓ = 910°C; t(Tₘₐₓ) = 25 Minuten), (Tₘₐₓ = 960°C; t(Tₘₐₓ) = 1 Minute), (Tₘₐₓ = 980°C; t(Tₘₐₓ) = 1 Minute) und (Tₘₐₓ = 965°C; t(Tₘₐₓ) = 25 Minuten) verbinden, wobei das Verfahren inklusive einer Abkühlung auf eine Temperatur von 780°C insgesamt weniger als 60 min benötigt.

15. Keramisierungsverfahren zur Herstellung eines glaskeramischen Substrates nach einem der Ansprüche 1 bis 12, bei dem ein Grünglas auf Basis einer Li₂O-Al₂O₃-SiO₂-Glaszusammensetzung mit (in Gew.%):
| | |
|---|---|
| Al₂O₃ | 18 - 23 |
| Li₂O | 3,0 - 4,2 |
| SiO₂ | 60 - 69 |
| ZnO | 0 - 2 |
| Na₂O + K₂O | 0,2 - 1,5 |
| MgO | 0 - 1,5 |
| CaO + SrO + BaO | 0 - 4 |
| B₂O₃ | 0 - 2 |
| TiO₂ | 2,3 - 4 |
| ZrO₂ | 0,5 - 2 |
| P₂O₅ | 0 - 3 |
| SnO₂ | 0 - < 0,6 |
| Sb₂O₃ | 0 - 1,5 |
| AS₂O₃ | 0 - 1,5 |
| TiO₂ + ZrO₂ + SnO₂ | 3,8 - 6 |
| V₂O₅ | 0,01 - 0,06 |
| Fe₂O₃ | 0,03 - 0,2 |
| Cr₂O₃ | < 100 ppm |
und gegebenenfalls weitere Farboxide, in Summe bis maximal 1,0 Gew.-%, einem Keimbildungsschritt,
anschließend einem Kristallwachstumsschritt, bei dem HQMK auf den Kristallkeimen aufwachsen, und
anschließend einem Kristallumwandlungsschritt mit den Verfahrensmerkmalen nach Anspruch 14 unterzogen wird.

16. Verfahren zur Herstellung eines glaskeramischen Substrates nach einem der Ansprüche 1 bis 12 mit den Schritten:
Aufschmelzen einer Li₂O-Al₂O₃-SiO₂-Glaszusammensetzung mit (in Gew.%):
| | |
|---|---|
| Al₂O₃ | 18 - 23 |
| Li₂O | 3,0 - 4,2 |
| SiO₂ | 60 - 69 |
| ZnO | 0 - 2 |
| Na₂O + K₂O | 0,2 - 1,5 |
| MgO | 0 - 1,5 |
| CaO + SrO + BaO | 0 - 4 |
| B₂O₃ | 0 - 2 |
| TiO₂ | 2,3 - 4 |
| ZrO₂ | 0,5 - 2 |
| P₂O₅ | 0 - 3 |
| SnO₂ | 0 - < 0,6 |
| Sb₂O₃ | 0 - 1,5 |
| AS₂O₃ | 0 - 1,5 |
| TiO₂ + ZrO₂ + SnO₂ | 3,8 - 6 |
| V₂O₅ | 0,01 - 0,06 |
| Fe₂O₃ | 0,03 - 0,2 |
| Cr₂O₃ | < 100 ppm |
und gegebenenfalls weitere Farboxide, in Summe bis maximal 1,0 Gew.-%, Läutern der Glasschmelze,
anschließend Formen eines Grünglases unter Abkühlung der Schmelze, anschließend Keramisieren des Grünglases gemäß den Verfahrensmerkmalen nach Anspruch 15.

17. Verfahren nach einem der Ansprüche 14 bis 16
**dadurch gekennzeichnet,**
**dass** das Grünglas oder das glaskeramische Zwischenerzeugnis über ein Zeitdauer von höchstens 45 Minuten und bevorzugt höchstens 30 Minuten von Raumtemperatur auf die Maximaltemperatur Tₘₐₓ erwärmt wird.

## Claims

1. Glass-ceramic substrate composed of a transparent, coloured LAS glass-ceramic having the following composition (in % by weight):
| | |
|---|---|
| Al₂O₃ | 18-23 |
| Li₂O | 3.0-4.2 |
| SiO₂ | 60-69 |
| ZnO | 0-2 |
| Na₂O + K₂O | 0.2-1.5 |
| MgO | 0-1.5 |
| CaO + SrO + BaO | 0-4 |
| B₂O₃ | 0-2 |
| TiO₂ | 2.3-4 |
| ZrO₂ | 0.5-2 |
| P₂O₅ | 0-3 |
| SnO₂ | 0-<0.6 |
| Sb₂O₃ | 0-1.5 |
| AS₂O₃ | 0-1.5 |
| TiO₂ + ZrO₂ + SnO₂ | 3.8-6 |
| V₂O₅ | 0.01-0.06 |
| Fe₂O₃ | 0.03-0.2 |
| Cr₂O₃ | < 100 ppm |
and optionally further colour oxides in a total amount of up to not more than 1.0% by weight,
having a gradient layer and a core located underneath, wherein the LAS glass-ceramic has keatite mixed crystal (KMC) as predominant crystal phase in the core and high-quartz mixed crystal (HQMC) as predominant crystal phase in the gradient layer and the proportion of KMC crystal phase at every depth ≥ 20 µm exceeds 50% of the sum of the proportions of the HQMC and KMC crystal phases.

2. Glass-ceramic substrate according to Claim 1,
**characterized by**
a fracture strength of the glass-ceramic, expressed by a CIL value of at least 0.8 N at an ambient humidity of 10% and/or a CIL value of at least 0.98 N at an ambient humidity of 1%.

3. Glass-ceramic substrate according to either of the preceding claims,
**characterized in that**
the depth profile of the proportions of the HQMC and KMC crystal phases and/or the strength is brought about by phase transformation of HQMC crystals into KMC crystals on ceramicization at a maximum temperature Tₘₐₓ and over a hold time t(Tₘₐₓ) at this maximum temperature in a temperature-time region which is delimited by four straight lines which connect the four corner points having the value pairs (Tₘₐₓ = 910°C; t (Tₘₐₓ) = 25 minutes), (Tₘₐₓ = 960°C; t (Tₘₐₓ) = 1 minute), (Tₘₐₓ = 980°C; t (Tₘₐₓ) = 1 minute) and (Tₘₐₓ = 965°C; t (Tₘₐₓ) = 25 minutes), where the process including cooling to a temperature of 780°C takes a total of less than 60 minutes.

4. Glass-ceramic substrate according to any of the preceding claims,
**characterized in that**
the maximum haze, normalized to a 4 mm thick glass-ceramic, at a wavelength of 470 nm is not more than 15%, preferably not more than 12%.

5. Glass-ceramic substrate according to any of the preceding claims,
**characterized in that**
the maximum haze, normalized to a 4 mm thick glass-ceramic, in a wavelength range from 400 nm to 500 nm does not exceed 20%, preferably 17%.

6. Glass-ceramic substrate according to any of the preceding claims,
**characterized in that**
the glass-ceramic has been produced from an LAS glass which is free of arsenic and antimony except for unavoidable traces and contains at least 0.1% by weight of SnO₂.

7. Glass-ceramic substrate according to any of the preceding claims,
**characterized by**
the condition 1 < Fe₂O₃/V₂O₅ < 8.

8. Glass-ceramic substrate according to any of the preceding claims,
**characterized in that**
the further colour oxides include at least one substance from the group consisting of the elements Cr, Mn, Co, Ni, Cu, Se, Mo, W, oxides thereof and metal oxides of the rare earths.

9. Glass-ceramic substrate according to any of the preceding claims,
**characterized in that**
the integrated visual transmission in the visible range, normalized to a 4 mm thick glass-ceramic, τ_{vis, 4mm}, is <= 5%.

10. Glass-ceramic substrate according to any of the preceding claims,
**characterized in that**
the spectral transmission, normalized to a 4 mm thick glass-ceramic, at a wavelength of 470 nm is > 0.1% and/or at a wavelength of 550 nm is > 0.25%.

11. Glass-ceramic substrate according to any of the preceding claims,
**characterized by**
a vitreous surface zone on the gradient layer having a thickness of 300-1000 nm, preferably 300-800 nm.

12. Glass-ceramic substrate according to any of the preceding claims,
**characterized in that**
the proportion of crystalline material in the core is not more than 82%, preferably not more than 80%, particularly preferably not more than 76%.

13. Use of a glass-ceramic substrate according to any of the preceding claims as cover for heating elements, in particular as cooking or frying surface, as white goods, as heating element cover, as grilling surface, as chimney sight glass, as support plate or oven lining in the ceramics, solar or pharmaceutical industry or in medical technology, in particular for production processes under high-cleanliness conditions, as lining of ovens in which chemical or physical coating processes are carried out or as chemically resistant laboratory equipment, as glass-ceramic article for high-temperature or extremely low-temperature applications, as oven window for combustion ovens, as heat shield for shielding from hot surroundings, as cover for reflectors, floodlights, projectors, beamers, photocopiers, for applications with thermomechanical stress, for example in night vision appliances, as wafer substrate, as translucent article with UV protection, as material for housing components, for example of electronic appliances and/or cover glasses for IT such as mobile telephones, laptops, scanner glasses, etc., as exterior wall plate, as fire protection glazing or as component for ballistic protection.

14. Ceramicization process for producing a glass-ceramic substrate according to any of Claims 1 to 12, wherein a precrystallized glass-ceramic intermediate having high-quartz mixed crystal (HQMC) as predominant crystal phase and based on an Li₂O-Al₂O₃-SiO₂ glass composition comprising (in % by weight):
| | |
|---|---|
| Al₂O₃ | 18-23 |
| Li₂O | 3.0-4.2 |
| SiO₂ | 60-69 |
| ZnO | 0-2 |
| Na₂O + K₂O | 0.2-1.5 |
| MgO | 0-1.5 |
| CaO + SrO + BaO | 0-4 |
| B₂O₃ | 0-2 |
| TiO₂ | 2.3-4 |
| ZrO₂ | 0.5-2 |
| P₂O₅ | 0-3 |
| SnO₂ | 0-< 0.6 |
| Sb₂O₃ | 0-1.5 |
| AS₂O₃ | 0-1.5 |
| TiO₂ + ZrO₂ + SnO₂ | 3.8-6 |
| V₂O₅ | 0.01-0.06 |
| Fe₂O₃ | 0.03-0.2 |
| Cr₂O₃ | < 100 ppm |
and optionally further colour oxides in a total amount of not more than 1.0% by weight is subjected to a crystal transformation step in which the HQMC crystal phase is partly converted into a KMC crystal phase, wherein the transformation step is carried out at a maximum temperature Tₘₐₓ and over a hold time t(Tₘₐₓ) at this maximum temperature in a temperature-time region which is delimited by four straight lines which connect the four corner points having the value pairs (Tₘₐₓ = 910°C; t(Tₘₐₓ) = 25 minutes) , (Tₘₐₓ = 960°C; t(Tₘₐₓ) = 1 minute), (Tₘₐₓ = 980°C; t((T_{maX}) = 1 minute) and (Tₘₐₓ = 965°C; t((Tₘₐₓ) = 25 minutes), where the process including cooling to a temperature of 780°C takes a total of less than 60 minutes.

15. Ceramicization process for producing a glass-ceramic substrate according to any of Claims 1 to 12, wherein a green glass based on an Li₂O-Al₂O₃-SiO₂ glass composition comprising (in % by weight):
| | |
|---|---|
| Al₂O₃ | 18-23 |
| Li₂O | 3.0-4.2 |
| SiO₂ | 60-69 |
| ZnO | 0-2 |
| Na₂O + K₂O | 0.2-1.5 |
| MgO | 0-1.5 |
| CaO + SrO + BaO | 0-4 |
| B₂O₃ | 0-2 |
| TiO₂ | 2.3-4 |
| ZrO₂ | 0.5-2 |
| P₂O₅ | 0-3 |
| SnO₂ | 0-< 0.6 |
| Sb₂O₃ | 0-1.5 |
| As₂O₃ | 0-1.5 |
| TiO₂ + ZrO₂ + SnO₂ | 3.8-6 |
| V₂O₅ | 0.01-0.06 |
| Fe₂O₃ | 0.03-0.2 |
| Cr₂O₃ | < 100 ppm |
and optionally further colour oxides in a total amount of up to not more than 1.0% by weight, is subjected to
a nucleation step,
subsequently a crystal growth step in which HQMC grow on the crystal nuclei, and
subsequently a crystal growth step having the process features according to Claim 14.

16. Process for producing a glass-ceramic substrate according to any of Claims 1 to 12, comprising the steps:
melting of an LiO₂-Al₂O₃-SiO₂ glass composition comprising (in % by weight):
| | |
|---|---|
| Al₂O₃ | 18-23 |
| Li₂O | 3.0-4.2 |
| SiO₂ | 60-69 |
| ZnO | 0-2 |
| Na₂O + K₂O | 0.2-1.5 |
| MgO | 0-1.5 |
| CaO + SrO + BaO | 0-4 |
| B₂O₃ | 0-2 |
| TiO₂ | 2.3-4 |
| ZrO₂ | 0.5-2 |
| P₂O₅ | 0-3 |
| SnO₂ | 0-< 0.6 |
| Sb₂O₃ | 0-1.5 |
| As₂O₃ | 0-1.5 |
| TiO₂ + ZrO₂ + SnO₂ | 3.8-6 |
| V₂O₅ | 0.01-0.06 |
| Fe₂O₃ | 0.03-0.2 |
| CrO₂O₃ | < 100 ppm |
and optionally further colour oxides in a total amount of up to not more than 1.0% by weight, refining of the glass melt,
subsequently shaping of a green glass with cooling of the melt,
subsequently ceramicization of the green glass according to the process features according to Claim 15.

17. Process according to any of Claims 14 to 16,
**characterized in that**
the green glass or glass-ceramic intermediate is heated from room temperature to the maximum temperature Tₘₐₓ over a period of not more than 45 minutes and preferably not more than 30 minutes.

## Revendications

1. Substrat vitrocéramique composé d'une vitrocéramique LAS transparente, colorée comportant la composition suivante (en % en poids) :
| | |
|---|---|
| Al₂O₃ | 18 à 23 |
| Li₂O | 3,0 à 4,2 |
| SiO₂ | 60 à 69 |
| ZnO | 0 à 2 |
| Na₂O + K₂O | 0,2 à 1,5 |
| MgO | 0 à 1,5 |
| CaO + SrO + BaO | 0 à 4 |
| B₂O₃ | 0 à 2 |
| TiO₂ | 2,3 à 4 |
| ZrO₂ | 0,5 à 2 |
| P₂O₅ | 0 à 3 |
| SnO₂ | 0 à < 0,6 |
| Sb₂O₃ | 0 à 1,5 |
| As₂O₃ | 0 à 1,5 |
| TiO₂ + ZrO₂ + SnO₂ | 3,8 à 6 |
| V₂O₅ | 0,01 à 0,06 |
| Fe₂O₃ | 0,03 à 0,2 |
| Cr₂O₃ | < 100 ppm |
et éventuellement d'autres oxydes colorés, au total jusqu'à maximum 1,0 % en poids,
comportant une couche de gradient et un noyau sous-jacent,
la vitrocéramique LAS présentant dans le noyau un cristal mixte de kéatite (KMK) en tant que phase cristalline majoritaire et un cristal mixte de quartz bêta (HQMK) en tant que phase cristalline majoritaire dans la couche de gradient et
la proportion de la phase cristalline KMK dans chaque profondeur ≥ 20 µm excédant 50 % de la somme des proportions de phase cristalline HQMK et
KMK.

2. Substrat vitrocéramique selon la revendication 1, **caractérisé par** une résistance à la rupture de la vitrocéramique, exprimée en une valeur CIL d'au moins 0,8 N à une humidité ambiante de 10 % et/ou une valeur CIL d'au moins 0,98 N à une humidité ambiante de 1 %.

3. Substrat vitrocéramique selon l'une quelconque des revendications précédentes, **caractérisé en ce que** le profil de profondeur des proportions de phases cristallines HQMK et KMK et/ou la résistance est mis(e) en œuvre par changement de phase de cristaux HQMK en KMK lors de céramisation à une température maximale Tₘₐₓ et pendant un temps de maintien t(Tₘₐₓ) de cette température maximale dans un domaine température-temps qui est délimité par quatre droites qui relient les quatre points de coin possédant les paires de valeurs (Tₘₐₓ = 910 °C ; t (Tₘₐₓ) = 25 minutes), (Tₘₐₓ = 960 °C ; t (Tₘₐₓ) = 1 minute), (Tₘₐₓ = 980 °C ; t(Tₘₐₓ) = 1 minute) et (Tₘₐₓ = 965 °C ; t(Tₘₐₓ) = 25 minutes), le procédé, y compris un refroidissement à une température de 780 °C, nécessitant au total moins de 60 min.

4. Substrat vitrocéramique selon l'une quelconque des revendications précédentes, **caractérisé en ce que** le trouble maximal (« Haze »), normalisé à une vitrocéramique de 4 mm d'épaisseur, à une longueur d'onde de 470 nm, est d'au plus 15 %, de préférence d'au plus 12 %.

5. Substrat vitrocéramique selon l'une quelconque des revendications précédentes, **caractérisé en ce que** le trouble maximal, normalisé à une vitrocéramique de 4 mm d'épaisseur, dans un domaine de longueurs d'onde de 400 nm à 500 nm, n'excède pas 20 %, de préférence 17 %.

6. Substrat vitrocéramique selon l'une quelconque des revendications précédentes, **caractérisé en ce que** la vitrocéramique est produite à partir d'un verre LAS exempt d'arsenic et d'antimoine, sauf impuretés inévitables, qui contient au moins 0,1 % en poids de SnO₂.

7. Substrat vitrocéramique selon l'une quelconque des revendications précédentes, **caractérisé par** la condition 1 < Fe₂O₃/V₂O₅ < 8.

8. Substrat vitrocéramique selon l'une quelconque des revendications précédentes, **caractérisé en ce que** les oxydes colorés supplémentaires comprennent au moins une substance choisie dans le groupe constitué par les éléments Cr, Mn, Co, Ni, Cu, Se, Mo, W, leurs oxydes et les oxydes métalliques des terres rares.

9. Substrat vitrocéramique selon l'une quelconque des revendications précédentes, **caractérisé en ce que** la transmission visuelle intégrale dans le visible, normalisée à une vitrocéramique de 4 mm d'épaisseur, τᵥᵢₛ, ₄ₘₘ, est <= 5 %.

10. Substrat vitrocéramique selon l'une quelconque des revendications précédentes, **caractérisé en ce que** la transmission spectrale, normalisée à une vitrocéramique de 4 mm d'épaisseur, à une longueur d'onde de 470 nm est > 0,1 % et/ou à une longueur d'onde de 550 nm est > 0,25 %.

11. Substrat vitrocéramique selon l'une quelconque des revendications précédentes, **caractérisé par** une zone superficielle vitreuse sur la couche de gradient comportant une épaisseur de 300 à 1 000 nm, préférablement 300 à 800 nm.

12. Substrat vitrocéramique selon l'une quelconque des revendications précédentes, **caractérisé en ce que** la proportion de cristal dans le noyau est d'au plus 82 %, préférablement d'au plus 80 %, particulièrement préférablement d'au plus 76 %.

13. Utilisation d'un substrat vitrocéramique selon l'une quelconque des revendications précédentes en tant que couverture pour des éléments de chauffage, en particulier en tant que surface de cuisson ou pour rôtir, en tant que produit blanc, en tant que couverture de corps de chauffe, en tant que surface de grill, en tant qu'hublot de cheminée, en tant que plaque de support ou revêtement de four dans l'industrie de la céramique, l'industrie solaire ou l'industrie pharmaceutique ou dans la technique médicale, en particulier pour des procédés de production dans des conditions de haute pureté, en tant que revêtement de fours dans lesquels des procédés de revêtements chimiques ou physiques sont mis en œuvre ou en tant qu'équipement de laboratoire résistant chimiquement, en tant qu'objet vitrocéramique pour des applications à haute température ou à des températures extrêmement basses, en tant que fenêtre de four pour des incinérateurs, en tant que bouclier thermique pour la protection d'environnements chauds, en tant que couverture pour des réflecteurs, des phares, des projecteurs, des vidéoprojecteurs, des photocopieurs, pour des applications avec contrainte thermomécanique, par exemple dans des appareils de vision nocturne, en tant que substrat de plaquette, en tant qu'objet et translucide avec protection UV, comme matériau pour des composants de boîtier par exemple d'appareils électroniques et/ou des verres de couverture pour l'informatique comme des téléphones mobiles, des ordinateurs portables, des verres de scanner etc., en tant que plaque de façade, en tant que vitrages anti incendie ou en tant que composant pour la protection balistique.

14. Procédé de céramisation pour la préparation d'un substrat vitrocéramique selon l'une quelconque des revendications 1 à 12, dans lequel un produit intermédiaire vitrocéramique précristallisé avec un cristal mixte de quartz bêta (HQMK) en tant que phase cristalline majoritaire à base d'une composition de verre de Li₂O-Al₂O₃-SiO₂ avec (en % en poids) :
| | |
|---|---|
| Al₂O₃ | 18 à 23 |
| Li₂O | 3,0 à 4,2 |
| SiO₂ | 60 à 69 |
| ZnO | 0 à 2 |
| Na₂O + K₂O | 0,2 à 1,5 |
| MgO | 0 à 1,5 |
| CaO + SrO + BaO | 0 à 4 |
| B₂O₃ | 0 à 2 |
| TiO₂ | 2,3 à 4 |
| ZrO₂ | 0,5 à 2 |
| P₂O₅ | 0 à 3 |
| SnO₂ | 0 à < 0,6 |
| Sb₂O₃ | 0 à 1,5 |
| As₂O₃ | 0 à 1,5 |
| TiO₂ + ZrO₂ + SnO₂ | 3,8 à 6 |
| V₂O₅ | 0,01 à 0,06 |
| Fe₂O₃ | 0,03 à 0,2 |
| Cr₂O₃ | < 100 ppm |
et éventuellement d'autres oxydes colorés, au total jusqu'à maximum 1,0 % en poids, est soumis à une étape de transformation cristalline, dans laquelle la phase cristalline de HQMK est transformée partiellement en une phase cristalline KMK, l'étape de transformation étant mise en œuvre à une température maximale Tₘₐₓ et pendant un temps de maintien t(Tₘₐₓ) de cette température maximale dans un domaine température-temps qui est délimité par quatre droites qui relient les quatre points de coin possédant les paires de valeurs (Tₘₐₓ = 910 °C ; t(Tₘₐₓ) = 25 minutes), (Tₘₐₓ = 960 °C ; t(Tₘₐₓ) = 1 minute), (Tₘₐₓ = 980 °C ; t(Tₘₐₓ) = 1 minute) et (Tₘₐₓ = 965 °C ; t(Tₘₐₓ) = 25 minutes), le procédé, y compris un refroidissement à une température de 780 °C, nécessitant au total moins de 60 min.

15. Procédé de céramisation pour la préparation d'un substrat vitrocéramique selon l'une quelconque des revendications 1 à 12, dans lequel un verre vert à base d'une composition de verre de Li₂O-Al₂O₃-SiO₂ avec (en % en poids) :
| | |
|---|---|
| Al₂O₃ | 18 à 23 |
| Li₂O | 3,0 à 4,2 |
| SiO₂ | 60 à 69 |
| ZnO | 0 à 2 |
| Na₂O + K₂O | 0,2 à 1,5 |
| MgO | 0 à 1,5 |
| CaO + SrO + BaO | 0 à 4 |
| B₂O₃ | 0 à 2 |
| TiO₂ | 2,3 à 4 |
| ZrO₂ | 0,5 à 2 |
| P₂O₅ | 0 à 3 |
| SnO₂ | 0 à < 0,6 |
| Sb₂O₃ | 0 à 1,5 |
| As₂O₃ | 0 à 1,5 |
| TiO₂ + ZrO₂ + SnO₂ | 3,8 à 6 |
| V₂O₅ | 0,01 à 0,06 |
| Fe₂O₃ | 0,03 à 0,2 |
| Cr₂O₃ | < 100 ppm |
et éventuellement d'autres oxydes colorés, au total jusqu'à maximum 1,0 % en poids, est soumis à une étape de formation de germe, ensuite à une étape de croissance cristalline, dans laquelle des HQMK croissent sur les germes cristallins, et ensuite à une étape de transformation cristalline avec les caractéristiques de procédé selon la revendication 14.

16. Procédé pour la préparation d'un substrat vitrocéramique selon l'une quelconque des revendications 1 à 12 comportant les étapes de :
fusion d'une composition de verre de Li₂O-Al₂O₃-SiO₂ avec (en % en poids) :
| | |
|---|---|
| Al₂O₃ | 18 à 23 |
| Li₂O | 3,0 à 4,2 |
| SiO₂ | 60 à 69 |
| ZnO | 0 à 2 |
| Na₂O + K₂O | 0,2 à 1,5 |
| MgO | 0 à 1,5 |
| CaO + SrO + BaO | 0 à 4 |
| B₂O₃ | 0 à 2 |
| TiO₂ | 2,3 à 4 |
| ZrO₂ | 0,5 à 2 |
| P₂O₅ | 0 à 3 |
| SnO₂ | 0 à < 0,6 |
| Sb₂O₃ | 0 à 1,5 |
| As₂O₃ | 0 à 1,5 |
| TiO₂+ZrO₂ + SnO₂ | 3,8 à 6 |
| V₂O₅ | 0,01 à 0,06 |
| Fe₂O₃ | 0,03 à 0,2 |
| Cr₂O₃ | < 100 ppm |
et éventuellement d'autres oxydes colorés, au total jusqu'à maximum 1,0 % en poids,
affinage de la masse fondue de verre,
ensuite mise en forme d'un verre vert par refroidissement de la masse fondue,
ensuite céramisation du verre vert selon les caractéristiques de procédé selon la revendication 15.

17. Procédé selon l'une quelconque des revendications 14 à 16 **caractérisé en ce que** le verre vert ou le produit intermédiaire vitrocéramique est réchauffé de la température ambiante à la température maximale Tₘₐₓ sur une période de temps d'au plus 45 minutes et préférablement d'au plus 30 minutes.
